# EUROPEAN PATENT APPLICATION

(11) **EP 4 686 303 A1**
(43) Date of publication of application: **28.01.2026**
(21) Application number: 24784371.7
(22) Date of filing: 03.04.2024
(51) Int. Cl.: H04W 72/563

(54) **COMMUNICATION METHOD AND APPARATUS**

(30) Priority: 07.04.2023 CN 202310405286
(71) Applicant: Huawei Technologies Co., Ltd., Shenzhen, Guangdong 518129 (CN)
(72) Inventor: LI, Tie, Shenzhen, Guangdong 518129 (CN); YU, Zheng, Shenzhen, Guangdong 518129 (CN)
(74) Representative: Isarpatent
(86) International application number: PCT/CN2024/085885
(87) International publication number: WO 2024/208289

(57) **Abstract**

A communication method and apparatus are provided, and relate to the field of communication technologies. The method may include: determining a first channel resource and at least one second channel resource, where the first channel resource is used to receive and/or send first information, and the second channel resource is used to receive and/or send second information; and when resource overlapping exists between the first channel resource and the at least one second channel resource, according to a priority rule, receiving and/or sending the first information on the first channel resource, or receiving and/or sending the second information on the at least one second channel resource. The method can be used to ensure overall performance of a communication system when the terminal device has a resource overlapping problem on different channel resources.

## Description

### CROSS-REFERENCE TO RELATED APPLICATIONS

This application claims priority to Chinese Patent Application No. 202310405286.0, filed with the China National Intellectual Property Administration on April 7, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

In a wireless communication system, a mobility technology is a key technology. For a terminal device in a connected state, the terminal device may move between different cells in a cell handover (handover) process.

In consideration of a service scenario with a low delay and heavy traffic (or referred to as a large capacity), for example, an extended reality (extended reality, XR) service or a cloud game (cloud game, CG) service, to reduce a cell handover delay, reduce signaling overheads, and ensure a high-quality service, 5G new radio (New Radio, NR) is considering supporting L1/L2 layer-triggered mobility (L1/L2 layer-Triggered Mobility, LTM) switching, to trigger switching through a lower layer, so as to reduce a delay or interruption time and implement "smooth" switching.

Because the LTM switching mechanism supports a carrier aggregation (carrier aggregation, CA) scenario and a dual connectivity (dual connectivity, DC) scenario, resource overlapping, also referred to as a communication collision or a communication conflict, may exist in a channel resource used for communication interaction between the terminal device and a serving cell, or a channel resource used for communication interaction between the terminal device and a non-serving cell (for example, a candidate cell). If information from the serving cell and/or the candidate cell cannot be simultaneously received and/or sent, or transmission and/or reception of the serving cell and/or the candidate cell cannot be simultaneously processed, overall performance of a communication system is affected.

How to resolve a problem of the communication collision or the communication conflict existing in the LTM switching mechanism is still under discussion.

### SUMMARY

Embodiments of this application provide a communication method and apparatus, to ensure overall performance of a communication system when a terminal device has a resource overlapping problem on different channel resources.

According to a first aspect, an embodiment of this application provides a communication method. The method may be applied to a communication apparatus. The communication apparatus may be a terminal device, or a chip or a chip system in the terminal device. The terminal device is used as an example. The method may be implemented in the following steps: determining a first channel resource and at least one second channel resource, where the first channel resource is used to receive and/or send first information, and the second channel resource is used to receive and/or send second information; and when resource overlapping exists between the first channel resource and the at least one second channel resource, according to a priority rule, receiving and/or sending the first information on the first channel resource, or receiving and/or sending the second information on the at least one second channel resource.

According to the foregoing method, after the terminal device determines the first channel resource and the at least one second channel resource, the terminal device may determine whether resource overlapping exists between the first channel resource and the at least one second channel resource, to determine, according to a priority rule, resources on which sending and/or receiving is to be performed, to prevent a terminal device without a parallel sending and/or receiving capability, as much as possible, from simultaneously performing uplink sending or downlink receiving on a channel resource in which a collision or a conflict occurs, to ensure overall performance of a communication system as much as possible.

With reference to the first aspect, in a possible implementation, the first channel resource is associated with a serving cell or a candidate cell, and the at least one second channel resource is associated with a candidate cell.

According to the foregoing method, in a cell handover scenario, the terminal device may select, based on an association relationship between a channel resource that needs to be used for sending or receiving and a serving cell or a candidate cell, in the first channel resource and the at least one second channel resource that need to be dropped (or referred to as suspend, stop, or cancel) uplink sending or downlink receiving.

With reference to the first aspect, in a possible implementation, the priority rule includes: when resource overlapping exists between the first channel resource and the at least one second channel resource, performing uplink sending or downlink receiving on a third channel resource in the first channel resource and the at least one second channel resource based on first priority information.

It should be noted that, in this embodiment of this application, the third channel resource is a high-priority channel resource in the first channel resource and the at least one second channel resource. The high-priority channel resource may mean, for example, that the third channel resource corresponds to a high priority, or may mean that information sent or received on the third channel resource corresponds to a high priority, or may mean that a channel and/or a signal sent or received on the third channel resource may correspond to a high priority, or may mean that information associated with the third channel resource may correspond to a high priority. The information associated with the third channel resource may be a frequency band, a bandwidth part (Bandwidth part, BWP), a cell, a TRP, or the like on which the third channel resource is located. This is not limited in embodiments of this application.

With reference to the first aspect, in a possible implementation, the first priority information includes: A priority of first information aperiodically sent or received is higher than a priority of second information semi-persistently sent or received; a priority of first information aperiodically sent or received is higher than a priority of second information periodically sent or received; a priority of first information semi-persistently sent or received is higher than a priority of second information periodically sent or received; a priority of second information aperiodically sent or received is higher than a priority of first information semi-persistently sent or received; a priority of second information aperiodically sent or received is higher than a priority of first information periodically sent or received; or a priority of second information semi-persistently sent or received is higher than a priority of first information periodically sent or received.

With reference to the first aspect, in a possible implementation, the first information includes a first channel and/or a first signal, and the second information includes a second channel and/or a second signal.

For example, the first channel or the second channel corresponds to any one of the following: a physical downlink shared channel PDSCH, a physical downlink control channel PDCCH, a physical uplink control channel PUCCH, a physical random access channel PRACH, or a physical uplink shared channel PUSCH.

For example, the first signal or the second signal corresponds to any one of the following: a synchronization signal and physical broadcast signal SSB, a channel state information-reference signal CSI-RS, a tracking reference signal TRS, a sounding reference signal SRS, or a random access preamble.

In another example, the first priority information may further include: a priority of a channel resource corresponding to a data channel is higher than a priority of a channel resource corresponding to a signal. For example, as shown below, a priority of the PDCCH is higher than a priority of the PDSCH, and a priority of the PDSCH is higher than a priority of the CSI-RS/SSB. Alternatively, for example, a priority of the PUCCH is higher than a priority of the PUSCH, and a priority of the PUSCH is higher than a priority of the SRS.

With reference to the first aspect, in a possible implementation, the first information may further include measurement result reporting information, for example, CSI (including at least one of an RI, a PMI, a CQI, and the like). Alternatively, the first information may further include a beam measurement result, for example, L1-RSRP or an L1-SINR. Alternatively, the first information may further include HARQ-ACK or NACK information. Alternatively, the first information may further include an SR. Alternatively, the first information may further include information carried in other UCI. Alternatively, the first information may further include DCI information.

With reference to the first aspect, in a possible implementation, the method may further include: receiving third information from a first network device, where the first network device is configured to configure or indicate at least one candidate cell, and the third information indicates priority information associated with the at least one candidate cell.

With reference to the first aspect, in a possible implementation, the method may further include: receiving fourth information from the first network device, where the first network device is configured to configure or indicate at least one candidate cell, and the fourth information indicates priority information associated with the first information and/or the second information.

With reference to the first aspect, in a possible implementation, the method may further include: sending fifth information to the network device, where the fifth information indicates a terminal capability, and the terminal capability includes at least one of the following: supporting LTM; supporting simultaneous transmission and/or reception of a serving cell and a candidate cell; a cell or a cell set that is not activated for transmission and/or reception; a cell or a cell set that is activated for transmission and/or reception; a cell or a cell set that is not configured for transmission and/or reception; a cell or a cell set that is configured for transmission and/or reception; a cell or a cell set that is unable to transmit and/or receive; a cell or a cell set that is able to transmit and/or receive; a frequency band group or a quantity of frequency band groups that cannot support simultaneous transmission and/or reception; a frequency layer or a quantity of frequency layers that cannot support simultaneous transmission and/or reception; a frequency layer or a quantity of frequency layers that can support simultaneous transmission and/or reception; a frequency band group or a quantity of frequency band groups that cannot support simultaneous transmission and/or reception; a frequency band group or a quantity of frequency band groups that can support simultaneous transmission and/or reception; a frequency band combination or a quantity of frequency band combinations that cannot support simultaneous transmission and/or reception; a frequency band combination or a quantity of frequency band combinations that can support simultaneous transmission and/or reception; a frequency band or a quantity of frequency bands that cannot support simultaneous transmission and/or reception; a frequency band or a quantity of frequency bands that can support simultaneous transmission and/or reception; a carrier or a quantity of carriers that cannot support simultaneous transmission and/or reception; a carrier or a quantity of carriers that can support simultaneous transmission and/or reception; a channel or a quantity of channels that cannot support simultaneous transmission and/or reception; a channel or a quantity of channels that can support simultaneous transmission and/or reception; an incapability to simultaneously transmit and/or receive; a port or a quantity of ports that can support simultaneous transmission and/or reception; a radio frequency chain, radio frequency branch, or corresponding quantity that cannot support simultaneous transmission and/or reception; a radio frequency chain, radio frequency branch, or corresponding quantity that can support simultaneous transmission and/or reception; a maximum quantity of layers that cannot support simultaneous transmission and/or reception; a maximum quantity of layers that can support simultaneous transmission and/or reception; a quantity of layers that cannot support simultaneous transmission and/or reception; a quantity of layers that can support simultaneous transmission and/or reception; a panel or a quantity of panels that cannot support simultaneous transmission and/or reception; a panel or a quantity of panels that can support simultaneous transmission and/or reception; a maximum quantity of ranks that cannot support simultaneous transmission and/or reception; a maximum quantity of ranks that can support simultaneous transmission and/or reception; a quantity of ranks that cannot support simultaneous transmission and/or reception; a quantity of ranks that can support simultaneous transmission and/or reception; or the channel may be a reception channel, a transmission channel, or a transceiver channel. The port may be a receive port, a transmit port, or a receive/transmit port. The radio frequency chain or the radio frequency branch may be a receive radio frequency chain or a radio frequency branch, may be a transmit radio frequency chain or a radio frequency branch, or may be a receive/transmit radio frequency chain or a radio frequency branch. A reporting manner may be reporting through RRC, a MAC-CE, or DCI.

According to a second aspect, an embodiment of this application provides a communication method. The method may be applied to a communication apparatus. The communication apparatus may be a network device, or a chip or a chip system in the network device. The network device is used as an example. The method may be implemented by using the following steps: when resource overlapping exists between a first channel resource and at least one second channel resource, sending and/or receiving first information on the first channel resource, or sending and/or receiving second information on the at least one second channel resource.

With reference to the second aspect, in a possible implementation, the first channel resource is associated with a serving cell or a candidate cell, and the at least one second channel resource is associated with a candidate cell.

With reference to the second aspect, in a possible implementation, the method further includes: sending third information to a terminal device, where the third information indicates priority information associated with at least one candidate cell.

With reference to the second aspect, in a possible implementation, the method further includes: sending fourth information to the terminal device, where the fourth information indicates priority information associated with the first information and/or the second information.

With reference to the second aspect, in a possible implementation, the priority information includes at least one of the following: A priority of first information aperiodically sent or received is higher than a priority of second information semi-persistently sent or received; a priority of first information aperiodically sent or received is higher than a priority of second information periodically sent or received; a priority of first information semi-persistently sent or received is higher than a priority of second information periodically sent or received; a priority of second information aperiodically sent or received is higher than a priority of first information semi-persistently sent or received; a priority of second information aperiodically sent or received is higher than a priority of first information periodically sent or received; or a priority of second information semi-persistently sent or received is higher than a priority of first information periodically sent or received.

With reference to the second aspect, in a possible implementation, the first information includes a first channel and/or a first signal, and the second information includes a second channel and/or a second signal.

With reference to the second aspect, in a possible implementation, the method further includes: receiving fifth information from the terminal device, where the fifth information indicates a terminal capability, and the terminal capability includes at least one of the following: supporting LTM; supporting simultaneous transmission and/or reception of a serving cell and a candidate cell; a cell or a cell set that is not activated for transmission and/or reception; a cell or a cell set that is activated for transmission and/or reception; a cell or a cell set that is not configured for transmission and/or reception; a cell or a cell set that is configured for transmission and/or reception; a cell or a cell set that is unable to transmit and/or receive; a cell or a cell set that is able to transmit and/or receive; a frequency band group or a quantity of frequency band groups that cannot support simultaneous transmission and/or reception; a frequency layer or a quantity of frequency layers that cannot support simultaneous transmission and/or reception; a frequency layer or a quantity of frequency layers that can support simultaneous transmission and/or reception; a frequency band group or a quantity of frequency band groups that cannot support simultaneous transmission and/or reception; a frequency band group or a quantity of frequency band groups that can support simultaneous transmission and/or reception; a frequency band combination or a quantity of frequency band combinations that cannot support simultaneous transmission and/or reception; a frequency band combination or a quantity of frequency band combinations that can support simultaneous transmission and/or reception; a frequency band or a quantity of frequency bands that cannot support simultaneous transmission and/or reception; a frequency band or a quantity of frequency bands that can support simultaneous transmission and/or reception; a carrier or a quantity of carriers that cannot support simultaneous transmission and/or reception; a carrier or a quantity of carriers that can support simultaneous transmission and/or reception; a channel or a quantity of channels that cannot support simultaneous transmission and/or reception; a channel or a quantity of channels that can support simultaneous transmission and/or reception; an incapability to simultaneously transmit and/or receive; a port or a quantity of ports that can support simultaneous transmission and/or reception; a radio frequency chain, radio frequency branch, or corresponding quantity that cannot support simultaneous transmission and/or reception; a radio frequency chain, radio frequency branch, or corresponding quantity that can support simultaneous transmission and/or reception; a maximum quantity of layers that cannot support simultaneous transmission and/or reception; a maximum quantity of layers that can support simultaneous transmission and/or reception; a quantity of layers that cannot support simultaneous transmission and/or reception; a quantity of layers that can support simultaneous transmission and/or reception; a panel or a quantity of panels that cannot support simultaneous transmission and/or reception; a panel or a quantity of panels that can support simultaneous transmission and/or reception; a maximum quantity of ranks that cannot support simultaneous transmission and/or reception; a maximum quantity of ranks that can support simultaneous transmission and/or reception; a quantity of ranks that cannot support simultaneous transmission and/or reception; a quantity of ranks that can support simultaneous transmission and/or reception; or the channel may be a reception channel, a transmission channel, or a transceiver channel. The port may be a receive port, a transmit port, or a receive/transmit port. The radio frequency chain or the radio frequency branch may be a receive radio frequency chain or a radio frequency branch, may be a transmit radio frequency chain or a radio frequency branch, or may be a receive/transmit radio frequency chain or a radio frequency branch. A reporting manner may be reporting through RRC, a MAC-CE, or DCI.

According to a third aspect, an embodiment of this application provides a communication apparatus. The communication apparatus may include: a processing unit, configured to determine a first channel resource and at least one second channel resource, where the first channel resource is used to receive and/or send first information, and the second channel resource is used to receive and/or send second information; and a transceiver unit, configured to: when resource overlapping exists between the first channel resource and the at least one second channel resource, according to a priority rule, receive and/or send the first information on the first channel resource, or receive and/or send the second information on the at least one second channel resource.

With reference to the third aspect, in a possible implementation, the first channel resource is associated with a serving cell or a candidate cell, and the at least one second channel resource is associated with a candidate cell.

With reference to the third aspect, in a possible implementation, the priority rule includes: when resource overlapping exists between the first channel resource and the at least one second channel resource, performing uplink sending or downlink receiving on a third channel resource in the first channel resource and the at least one second channel resource based on first priority information.

With reference to the third aspect, in a possible implementation, the first priority information includes at least one of the following: A priority of first information aperiodically sent or received is higher than a priority of second information semi-persistently sent or received; a priority of first information aperiodically sent or received is higher than a priority of second information periodically sent or received; a priority of first information semi-persistently sent or received is higher than a priority of second information periodically sent or received; a priority of second information aperiodically sent or received is higher than a priority of first information semi-persistently sent or received; a priority of second information aperiodically sent or received is higher than a priority of first information periodically sent or received; or a priority of second information semi-persistently sent or received is higher than a priority of first information periodically sent or received.

With reference to the third aspect, in a possible implementation, the first information includes a first channel and/or a first signal, and the second information includes a second channel and/or a second signal.

With reference to the third aspect, in a possible implementation, the transceiver unit is further configured to receive third information from a first network device, where the first network device is configured to configure or indicate at least one candidate cell, and the third information indicates priority information associated with the at least one candidate cell.

With reference to the third aspect, in a possible implementation, the transceiver unit is further configured to receive fourth information from the first network device, where the first network device is configured to configure or indicate at least one candidate cell, and the fourth information indicates priority information associated with the first information and/or the second information.

With reference to the third aspect, in a possible implementation, the transceiver unit is further configured to send fifth information to the network device, where the fifth information indicates a terminal capability, and the terminal capability includes at least one of the following: supporting LTM; supporting simultaneous transmission and/or reception of a serving cell and a candidate cell; a cell or a cell set that is not activated for transmission and/or reception; a cell or a cell set that is activated for transmission and/or reception; a cell or a cell set that is not configured for transmission and/or reception; a cell or a cell set that is configured for transmission and/or reception; a cell or a cell set that is unable to transmit and/or receive; a cell or a cell set that is able to transmit and/or receive; a frequency band group or a quantity of frequency band groups that cannot support simultaneous transmission and/or reception; a frequency layer or a quantity of frequency layers that cannot support simultaneous transmission and/or reception; a frequency layer or a quantity of frequency layers that can support simultaneous transmission and/or reception; a frequency band group or a quantity of frequency band groups that cannot support simultaneous transmission and/or reception; a frequency band group or a quantity of frequency band groups that can support simultaneous transmission and/or reception; a frequency band combination or a quantity of frequency band combinations that cannot support simultaneous transmission and/or reception; a frequency band combination or a quantity of frequency band combinations that can support simultaneous transmission and/or reception; a frequency band or a quantity of frequency bands that cannot support simultaneous transmission and/or reception; a frequency band or a quantity of frequency bands that can support simultaneous transmission and/or reception; a carrier or a quantity of carriers that cannot support simultaneous transmission and/or reception; a carrier or a quantity of carriers that can support simultaneous transmission and/or reception; a channel or a quantity of channels that cannot support simultaneous transmission and/or reception; a channel or a quantity of channels that can support simultaneous transmission and/or reception; an incapability to simultaneously transmit and/or receive; a port or a quantity of ports that can support simultaneous transmission and/or reception; a radio frequency chain, radio frequency branch, or corresponding quantity that cannot support simultaneous transmission and/or reception; a radio frequency chain, radio frequency branch, or corresponding quantity that can support simultaneous transmission and/or reception; a maximum quantity of layers that cannot support simultaneous transmission and/or reception; a maximum quantity of layers that can support simultaneous transmission and/or reception; a quantity of layers that cannot support simultaneous transmission and/or reception; a quantity of layers that can support simultaneous transmission and/or reception; a panel or a quantity of panels that cannot support simultaneous transmission and/or reception; a panel or a quantity of panels that can support simultaneous transmission and/or reception; a maximum quantity of ranks that cannot support simultaneous transmission and/or reception; a maximum quantity of ranks that can support simultaneous transmission and/or reception; a quantity of ranks that cannot support simultaneous transmission and/or reception; a quantity of ranks that can support simultaneous transmission and/or reception; or the channel may be a reception channel, a transmission channel, or a transceiver channel. The port may be a receive port, a transmit port, or a receive/transmit port. The radio frequency chain or the radio frequency branch may be a receive radio frequency chain or a radio frequency branch, may be a transmit radio frequency chain or a radio frequency branch, or may be a receive/transmit radio frequency chain or a radio frequency branch. A reporting manner may be reporting through RRC, a MAC-CE, or DCI.

According to a fourth aspect, an embodiment of this application further provides a communication apparatus. The communication apparatus may include:
a transceiver unit, configured to: when resource overlapping exists between a first channel resource and at least one second channel resource, send and/or receive first information on the first channel resource, or send and/or receive second information on the at least one second channel resource.

With reference to the fourth aspect, in a possible implementation, the first channel resource is associated with a serving cell or a candidate cell, and the at least one second channel resource is associated with a candidate cell.

With reference to the fourth aspect, in a possible implementation, the transceiver unit is further configured to send third information to a terminal device, where the third information indicates priority information associated with at least one candidate cell.

With reference to the fourth aspect, in a possible implementation, the transceiver unit is further configured to send fourth information to the terminal device, where the fourth information indicates priority information associated with the first information and/or the second information.

With reference to the fourth aspect, in a possible implementation, the priority information includes at least one of the following: A priority of first information aperiodically sent or received is higher than a priority of second information semi-persistently sent or received; a priority of first information aperiodically sent or received is higher than a priority of second information periodically sent or received; a priority of first information semi-persistently sent or received is higher than a priority of second information periodically sent or received; a priority of second information aperiodically sent or received is higher than a priority of first information semi-persistently sent or received; a priority of second information aperiodically sent or received is higher than a priority of first information periodically sent or received; or a priority of second information semi-persistently sent or received is higher than a priority of first information periodically sent or received.

With reference to the fourth aspect, in a possible implementation, the first information includes a first channel and/or a first signal, and the second information includes a second channel and/or a second signal.

With reference to the fourth aspect, in a possible implementation, the transceiver unit is further configured to receive fifth information from the terminal device, where the fifth information indicates a terminal capability, and the terminal capability includes at least one of the following: supporting LTM; supporting simultaneous transmission and/or reception of a serving cell and a candidate cell; a cell or a cell set that is not activated for transmission and/or reception; a cell or a cell set that is activated for transmission and/or reception; a cell or a cell set that is not configured for transmission and/or reception; a cell or a cell set that is configured for transmission and/or reception; a cell or a cell set that is unable to transmit and/or receive; a cell or a cell set that is able to transmit and/or receive; a frequency band group or a quantity of frequency band groups that cannot support simultaneous transmission and/or reception; a frequency layer or a quantity of frequency layers that cannot support simultaneous transmission and/or reception; a frequency layer or a quantity of frequency layers that can support simultaneous transmission and/or reception; a frequency band group or a quantity of frequency band groups that cannot support simultaneous transmission and/or reception; a frequency band group or a quantity of frequency band groups that can support simultaneous transmission and/or reception; a frequency band combination or a quantity of frequency band combinations that cannot support simultaneous transmission and/or reception; a frequency band combination or a quantity of frequency band combinations that can support simultaneous transmission and/or reception; a frequency band or a quantity of frequency bands that cannot support simultaneous transmission and/or reception; a frequency band or a quantity of frequency bands that can support simultaneous transmission and/or reception; a carrier or a quantity of carriers that cannot support simultaneous transmission and/or reception; a carrier or a quantity of carriers that can support simultaneous transmission and/or reception; a channel or a quantity of channels that cannot support simultaneous transmission and/or reception; a channel or a quantity of channels that can support simultaneous transmission and/or reception; an incapability to simultaneously transmit and/or receive; a port or a quantity of ports that can support simultaneous transmission and/or reception; a radio frequency chain, radio frequency branch, or corresponding quantity that cannot support simultaneous transmission and/or reception; a radio frequency chain, radio frequency branch, or corresponding quantity that can support simultaneous transmission and/or reception; a maximum quantity of layers that cannot support simultaneous transmission and/or reception; a maximum quantity of layers that can support simultaneous transmission and/or reception; a quantity of layers that cannot support simultaneous transmission and/or reception; a quantity of layers that can support simultaneous transmission and/or reception; a panel or a quantity of panels that cannot support simultaneous transmission and/or reception; a panel or a quantity of panels that can support simultaneous transmission and/or reception; a maximum quantity of ranks that cannot support simultaneous transmission and/or reception; a maximum quantity of ranks that can support simultaneous transmission and/or reception; a quantity of ranks that cannot support simultaneous transmission and/or reception; a quantity of ranks that can support simultaneous transmission and/or reception; or the channel may be a reception channel, a transmission channel, or a transceiver channel. The port may be a receive port, a transmit port, or a receive/transmit port. The radio frequency chain or the radio frequency branch may be a receive radio frequency chain or a radio frequency branch, may be a transmit radio frequency chain or a radio frequency branch, or may be a receive/transmit radio frequency chain or a radio frequency branch. A reporting manner may be reporting through RRC, a MAC-CE, or DCI.

According to a fifth aspect, this application provides a communication apparatus. The communication apparatus is used in a terminal device or a chip of a terminal device, and includes a unit or a means (means) configured to perform the method according to any one of the first aspect or the possible implementations of the first aspect.

According to a sixth aspect, this application provides a communication apparatus. The communication apparatus is used in a network device or a chip of a network device, and includes a unit or a means configured to perform the method according to any one of the second aspect or the possible implementations of the second aspect.

According to a seventh aspect, this application provides a communication apparatus. The communication apparatus is used in a terminal device or a chip of a terminal device, and includes at least one processing element and at least one storage element. The at least one storage element is configured to store a program and data, and the at least one processing element is configured to perform the method according to any one of the first aspect or the possible implementations of the first aspect.

According to an eighth aspect, this application provides a communication apparatus. The communication apparatus is used in a network device or a chip of a network device, and includes at least one processing element and at least one storage element. The at least one storage element is configured to store a program and data, and the at least one processing element is configured to perform the method according to any one of the second aspect or the possible implementations of the second aspect.

According to a ninth aspect, this application provides a communication apparatus, including a processor and a communication interface. The communication interface is configured to: input and/or output a signal, where the signal includes data and/or program instructions. The communication interface can receive a signal from a communication apparatus other than the communication apparatus, transmit the signal to the processor, or send a signal from the processor to a communication apparatus other than the communication apparatus. The processor is configured to implement the method according to any one of the first aspect or the possible implementations of the first aspect through a logic circuit or by executing code instructions.

According to a tenth aspect, this application provides a communication apparatus, including a processor and a communication interface. The communication interface is configured to: input and/or output a signal, where the signal includes data and/or program instructions. The communication interface can receive a signal from a communication apparatus other than the communication apparatus, transmit the signal to the processor, or send a signal from the processor to a communication apparatus other than the communication apparatus. The processor is configured to implement the method according to any one of the second aspect or the possible implementations of the second aspect through a logic circuit or by executing code instructions.

According to an eleventh aspect, this application provides a computer program product. The computer program product includes computer instructions. When the computer instructions are executed, the method according to any one of the first aspect or the possible implementations of the first aspect is performed.

According to a twelfth aspect, this application provides a computer program product. The computer program product includes computer instructions. When the computer instructions are executed, the method according to any one of the second aspect or the possible implementations of the second aspect is performed.

According to a thirteenth aspect, this application provides a computer-readable storage medium. The computer storage medium stores computer instructions. When the computer instructions are executed, the method according to any one of the first aspect or the possible implementations of the first aspect is performed.

According to a fourteenth aspect, this application provides a computer-readable storage medium. The computer storage medium stores computer instructions. When the computer instructions are executed, the method according to any one of the second aspect or the possible implementations of the second aspect is performed.

For descriptions of beneficial effect of the third aspect to the fourteenth aspect, refer to the descriptions of the first aspect and the second aspect. Details are not described herein again.

### BRIEF DESCRIPTION OF DRAWINGS

FIG. 1a and FIG. 1b each are a diagram of an architecture of a communication system;
FIG. 2 is a diagram of two cell handover technologies;
FIG. 3 is a diagram of uplink synchronization between a terminal device and a candidate cell in an LTM switching;
FIG. 4 is a diagram of time domain overlapping;
FIG. 5 is a schematic flowchart of a communication method according to an embodiment of this application;
FIG. 6 to FIG. 8 are diagrams of conflict cases according to embodiments of this application;
FIG. 9 is a diagram of a structure of a communication apparatus according to an embodiment of this application; and
FIG. 10 is a diagram of a structure of a communication apparatus according to an embodiment of this application.

### DESCRIPTION OF EMBODIMENTS

Embodiments of this application provide a communication method and apparatus, to ensure overall performance of a communication system when a terminal device has a resource overlapping problem on different channel resources. The method and the apparatus are based on a same technical concept or similar technical concepts. Because problem-resolving principles of the method and the apparatus are similar, mutual reference may be made to implementation of the apparatus and the method, and repeated parts are not described. In addition, in embodiments of this application, unless otherwise stated or there is a logic conflict, terms and/or descriptions between embodiments are consistent and may be mutually referenced, and technical features in different embodiments may be combined into a new embodiment based on an internal logical relationship thereof.

The technical solutions in embodiments of this application may be applied to various communication systems, for example, a long term evolution (long term evolution, LTE) system, a worldwide interoperability for microwave access (worldwide interoperability for microwave access, WiMAX) communication system, an internet of things (internet of things, IoT) system, a narrowband internet of things (narrow band internet of things, NB-IoT) system, a 5th generation (5th Generation, 5G) system, for example, a new generation radio access technology (new radio access technology, NR), and a new communication system, for example, a 6G system.

The 5G communication system in this application may include at least one of a non-standalone (non-standalone, NSA) 5G communication system and a standalone (standalone, SA) 5G communication system. The communication system may alternatively be a public land mobile network (public land mobile network, PLMN) network, a device-to-device (device-to-device, D2D) network, a machine to machine (machine to machine, M2M) network, or another network.

The following describes in detail embodiments of this application with reference to accompanying drawings.

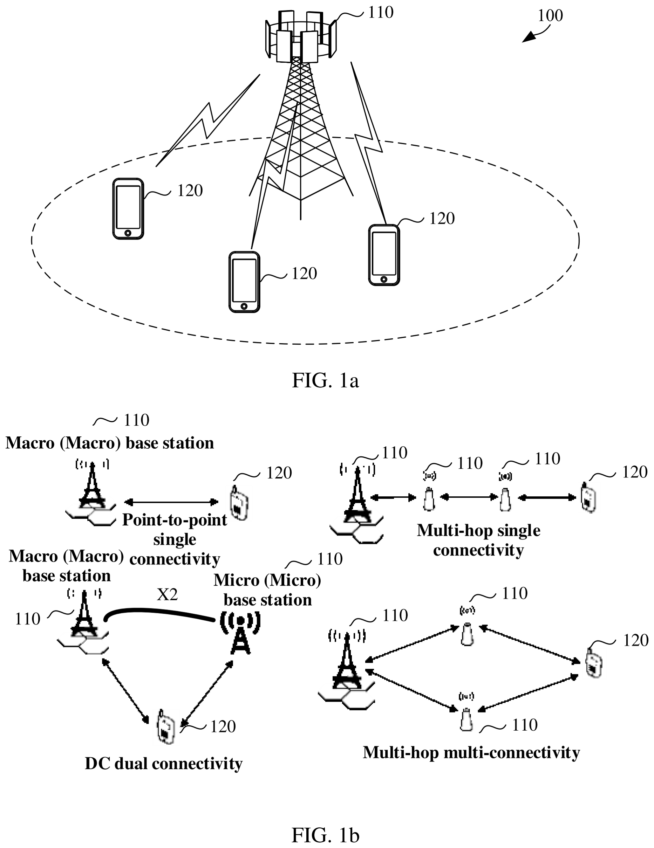

FIG. 1a shows an architecture of a communication system 100 to which a communication method according to an embodiment of this application is applicable. The communication system 100 may include a network device 110 and one or more terminal devices 120. The network device and the terminal device may work in a new radio (new radio, NR) communication system, and the terminal device may communicate with the network device through the NR communication system. The network device and the terminal device may also work in another communication system. This is not limited in embodiments of this application.

The network device 110 is a node in a radio access network (radio access network, RAN), and may also be referred to as a base station, an access network device, or a node, or may also be referred to as a RAN node (or a device). Currently, some examples of the node 101 are: a next generation NodeB (next generation NodeB, gNB), a next generation evolved NodeB (next generation evolved NodeB, Ng-eNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a device in a 5G communication system, or a network device in a future possible communication system. The network device 110 may alternatively be a device that functions as a base station in device-to-device (device to device, D2D) communication. In embodiments of this application, when the network device 110 communicates with the terminal device, there may be one or more network devices, and the network devices may locate in a same cell, or may locate in different cells.

The terminal device 120 may be a device having a wireless transceiver function, and may be deployed on land, including an indoor device, an outdoor device, a handheld device, or a vehicle-mounted device; may be deployed on water (for example, on a ship); or may be deployed in the air (for example, on an airplane, a balloon, or a satellite), and is a device that provides voice or data connectivity for a user, or may be an internet of things device. The terminal device may also be referred to as user equipment (user equipment, UE), a mobile station (mobile station, MS), a mobile terminal (mobile terminal, MT), or the like. The terminal device may be user equipment (user equipment, UE). The UE includes a handheld device, a vehicle-mounted device, a wearable device, or a computing device having a wireless communication function. The terminal device in embodiments of this application may also be referred to as a terminal. For example, the UE may be a mobile phone (mobile phone), a tablet computer, or a computer with a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like. In embodiments of this application, an apparatus configured to implement a function of a terminal may be a terminal; or may be an apparatus that can support the terminal in implementing the function, for example, a chip system. The apparatus may be installed in the terminal. In embodiments of this application, the chip system may include a chip, or may include a chip and another discrete component. In the technical solutions provided in embodiments of this application, the technical solutions provided in embodiments of this application are described by using an example in which the apparatus for implementing a function of the terminal is a terminal and the terminal is UE.

Transmission between the network device 110 and the terminal device 120 may be performed through a radio wave, or may be performed through a transmission medium such as visible light, a laser, infrared, or an optical fiber. In embodiments of this application, an example in which a device implementing a function of the terminal device 120 is referred to as a terminal is used for description.

This application is specific to protocol frameworks such as 5G NR and 5G-Advanced, and may be applied to a plurality of mobile communication scenarios. FIG. 1b is a diagram of a scenario of a communication system to which this present invention is applied, for example, pointto-point transmission between a base station and UE (user equipment, user equipment), between a transmission reception node (transmission reception point, TRP) and UE, or between UEs, multihop/relay transmission between a base station and user equipment, and DC (dual connectivity, dual connectivity) or multi-connectivity between a plurality of base stations and user equipments. It should be noted that FIG. 1b is merely an example, and imposes no limitation on a network architecture applicable to this present invention. In addition, transmission such as uplink transmission, downlink transmission, access link transmission, backhaul (backhaul) link transmission, and sidelink (sidelink) transmission is not limited in this present invention. In addition, from a perspective of a service scenario, the solutions of this application are applicable to many scenario solutions, including but not limited to an extended reality (extended reality, XR) service, a cloud game (cloud game, CG) service, and the like.

The technical solutions provided in embodiments of this application may be applied to wireless communication between communication devices. The wireless communication between the communication devices may include: wireless communication between a network device and a terminal, wireless communication between network devices, and wireless communication between terminals. In embodiments of this application, the term "wireless communication" may also be referred to as "communication" for short, and the term "communication" may also be described as "data transmission", "information transmission", or "transmission".

A wireless communication system includes communication devices, and the communication devices may perform wireless communication based on an air interface resource. The communication devices may include a network device and a terminal device, and the network device may also be referred to as a base station device. The air interface resource may include at least one of a time domain resource, a frequency domain resource, a code resource, and a spatial resource. In embodiments of this application, "at least one" may alternatively be described as one or more, and "more" may be two, three, four, or more. This is not limited in this application.

**In** embodiments of this application, "first", "second", "third", "A", "B", "C", "D", and the like are used for distinguishing between technical features described by them. There is no chronological order or no size order between the technical features described by "first", "second", "third", "A", "B", "C", and "D".

Embodiments of this application are applicable to scenarios in which there is one or more sending/receiving apparatuses, and a scenario derived from any one of the scenarios. The sending/receiving apparatus may be a transmission and reception point (transmission and reception point, TRP), or may be a remote radio unit (remote radio unit, RRU), or the like. In a scenario in which there are a plurality of TRPs, the plurality of TRPs may be connected to a same baseband unit (baseband unit, BBU), or may be connected to different BBUs. The plurality of TRPs herein may belong to a same cell, or may belong to different cells.

In embodiments of this application, a function of the base station may be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A terminal function may be performed by a module (for example, a chip or a modem) in the terminal, or may be performed by an apparatus including the terminal function. When the specific method is described in this application, an example in which a device implementing the function of the base station is a network device and an example in which a device implementing the function of the terminal is a terminal device are used for description.

The foregoing content describes the system architecture and the possible application scenarios in embodiments of this application. To better understand the technical solutions in embodiments of this application, the following describes technical features in embodiments of this application.

### 1. LTM:

Generally, before accessing a new cell, a terminal device (for example, UE) needs to perform processes such as neighboring cell measurement, neighboring cell downlink synchronization, neighboring cell uplink synchronization, neighboring cell beam management (or referred to as beam refinement), and neighboring cell channel quality measurement, so that data transmission can be performed with a base station that manages a corresponding neighboring cell.

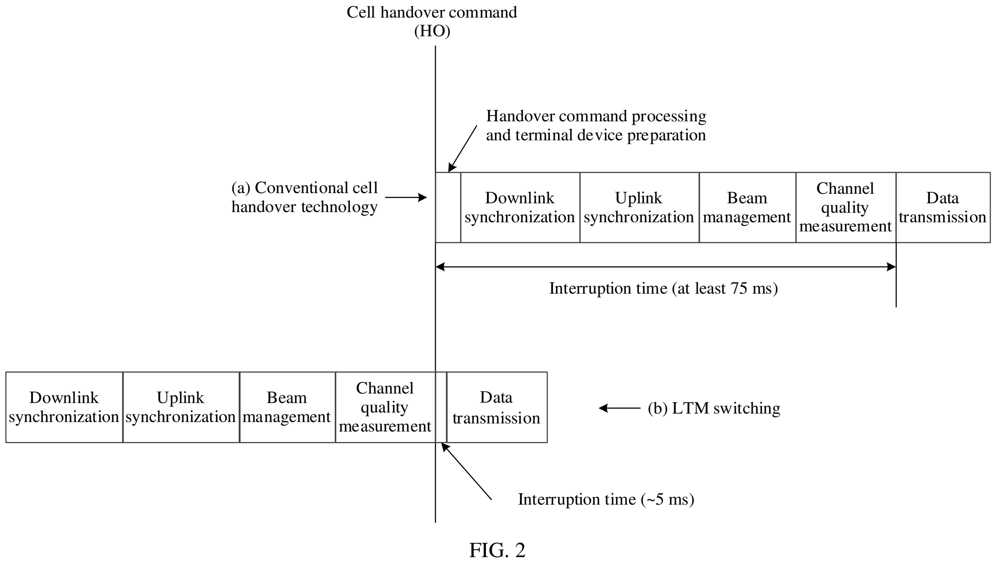

As shown in (a) in FIG. 2, in a conventional cell handover technology (for example, 3GPP Rel-17), the terminal device performs neighboring cell measurement before receiving a cell handover command, and the terminal device performs a subsequent process like downlink synchronization, uplink synchronization, beam management, or channel quality measurement after receiving the cell handover command. Further, after the terminal device receives the cell handover command, the terminal device executes the cell handover command, and performs data transmission with a new accessed cell. Herein, the terminal device interrupts communication interaction with a serving cell from a moment at which the terminal device receives the cell handover command to a moment at which the terminal device performs data transmission with the newly accessed cell, and communication interruption duration (interruption time for short) is at least 75 milliseconds (ms). Consequently, a total delay of performing cell handover by the terminal device is excessively long, and service implementation on a terminal device side is affected.

In consideration of a service scenario with a low delay and heavy traffic (or referred to as a large capacity), for example, an extended reality (extended reality, XR) service or a cloud game (cloud game, CG) service, to reduce a cell handover delay, reduce signaling overheads, and ensure a high-quality service, 5G new radio (New Radio, NR) is considering supporting LTM switching. LTM switching is L1/L2 layer-triggered mobility (L1/L2 layer-Triggered Mobility) or lower layer-triggered mobility (Lower layer-Triggered Mobility), to trigger switching through a lower layer, so as to reduce a delay or interruption time and implement "smooth" switching.

As shown in (b) in FIG. 2, in the currently discussed LTM switching mechanism, the terminal device performs a process like neighboring cell measurement, downlink synchronization, uplink synchronization, beam management, or channel quality measurement before performing cell handover, and is handed over to a new cell after receiving a cell handover command, to trigger a cell handover through L1/L2 signaling to implement a serving cell change (including a singlecell change scenario or a multi-cell change scenario). After accessing the new cell, the terminal device can immediately perform data transmission with the new cell. Herein, the terminal device interrupts communication interaction with the serving cell from a moment at which the terminal device receives the cell handover command to a moment at which the terminal device performs data transmission with the newly accessed cell, and communication interruption duration (interruption time for short) is approximately (represented by a symbol "~") 5 milliseconds (ms), which is far less than the total delay required by using the conventional cell handover technology. Therefore, a cell handover delay, overheads, and interruption time can be reduced by using the LTM switching mechanism, and it can be ensured that a service on the terminal device side is unaware of a cell handover process as much as possible.

With evolution of a mobile communication technology and the LTM switching mechanism, currently, LTM switching may involve a plurality of scenarios, for example, a scenario in which a serving cell and a candidate cell are intra-frequency synchronous, intra-frequency asynchronous, inter-frequency synchronous, or inter-frequency asynchronous. Alternatively, for example, the scenario related to LTM switching may include a scenario of switching from a low frequency to a low frequency, a scenario of switching from a low frequency to a high frequency, or a scenario of switching from a high frequency to a high frequency. For example, a network device (for example, a base station) uses a DU-CU split architecture. The scenario related to LTM switching may further include intra-CU switching, intra-DU switching, and/or inter-DU intra-CU switching. intra indicates an intra-base-station switching, and inter indicates an inter-base-station switching. intra-DU indicates handover between different cells managed by a same DU, and inter-DU intra-CU indicates handover between different cells managed by a same CU and different DUs. After LTM switching is triggered, the terminal device may access the target cell in a random access (random access channel, RACH) process.

### 2. Serving cell and candidate cell:

### (1) Serving cell:

In this embodiment of this application, the serving cell may include a primary serving cell and/or a secondary serving cell.

A primary cell (Primary Cell, PCell) and a secondary cell (Secondary Cell, SCell) are used for features of carrier aggregation (carrier aggregation, CA).

The primary cell is a cell on which a terminal device (for example, represented as CA UE) supporting CA camps, and operates on a primary carrier (primary carrier component, PCC). The CA UE operates in the same way as in a single-carrier cell.

The secondary cell is a cell configured by a base station for the CA UE through RRC connection signaling. The secondary cell operates on a secondary carrier component (secondary carrier component, SCC), and can provide more radio resources for the CA UE. In the SCell, there may be only downlink transmission or both uplink and downlink transmission.

### (2) Candidate cell:

The candidate cell in this embodiment of this application is any cell other than a primary serving cell, and may also be referred to as a neighboring cell, a candidate neighboring cell, a target cell, or a candidate target cell.

It should be understood that the candidate cell may be a secondary serving cell, a non-serving cell (the non-serving cell is a cell other than a primary serving cell and a secondary serving cell), or a cell whose PCI is different from that of a serving cell (the serving cell is a primary serving cell and/or a secondary serving cell), a cell whose PCI associated with a reference signal is different from that of a serving cell, a cell whose PCI associated with a reference signal is different from that of a primary serving cell, a cell whose PCI associated with a reference signal is different from that of a secondary serving cell, or the like.

For example, the candidate cell may be configured to be at least one cell in a cell set for handover.

Alternatively, for example, the candidate cell may be at least one cell in a cell set in the LTM configuration.

Alternatively, for example, the candidate cell may be configured for at least one cell associated with downlink beam measurement.

Alternatively, for example, the candidate cell may be configured to obtain at least one cell associated with TA.

Alternatively, for example, the candidate cell may be configured to obtain at least one cell associated with channel state information.

Alternatively, for example, the candidate cell may be configured to obtain at least one cell associated with timing offset or frequency offset information.

Alternatively, for example, the candidate cell may be at least one cell indicated by the PDCCH order.

Alternatively, for example, the candidate cell may be at least one cell indicated in at least one of the following manners: RRC, media access control-control element (medium access control-control element, MAC-CE) signaling, and downlink control information (downlink control information, DCI) signaling.

Alternatively, for example, the candidate cell may be a transmission reception point TRP (Transmission reception point).

Alternatively, for example, the candidate cell may be a TRP whose PCI is different from a serving cell.

### 3. Carrier aggregation (carrier aggregation, CA):

In long term evolution (long term evolution, LTE), it is stipulated that a component carrier (component carrier, CC) may have a maximum bandwidth of 20 MHz. However, as communication technologies continuously develop, the 20 MHz bandwidth cannot meet a requirement of a long term evolution advanced (long term evolution advanced, LTE-A) system for a downlink peak rate of 1 Gbps and an uplink peak rate of 500 Mbps. Therefore, a carrier aggregation (carrier aggregation, CA) technology is introduced.

Specifically, the CA technology means that two or more CCs are aggregated to support a larger transmission bandwidth. In the LTE-A system, one terminal device supports a maximum of five CCs. In an NR system, for a terminal device, a maximum of 16 CCs are supported in an uplink and a downlink respectively, one CC forms one cell, and a cell one-to-one corresponds to a CC. In actual application, the terminal device may determine, based on a capability of the terminal device, a maximum quantity of carriers that can be simultaneously used for uplink and downlink transmission.

A CA function may support contiguous or non-contiguous carrier aggregation such as carrier aggregation with a frequency band D of 2.6 GHz, F+D frequency bands, and an indoor frequency band E. Each independent carrier can use a maximum of 100 resource blocks (resource block, RB) (1200/12=100), that is, a bandwidth of LTE with 20 M. Each terminal device uses an independent hybrid automatic repeat request (hybrid automatic repeat request, HARQ) entity on each carrier, and a transport block of each terminal device can be mapped to only one specific cell carrier. Physical downlink control channels (physical downlink control channels, PDCCH) on each carrier are independent of each other.

To support services such as a low delay and heavy traffic, the LTM switching mechanism is agreed to support a CA technology and a dual connectivity (dual connectivity, DC) scenario.

### 4. Channel resource:

In this embodiment of this application, the channel resource is a resource of a channel used for communication interaction between a terminal device and a network device.

In an example (1), the channel resource may be a period of time, and/or a frequency, and/or a space, and/or a code space.

In another example (2), the channel resource may be a symbol, and/or a slot, and/or a subframe, and/or a radio frame, and/or a resource block (RB), and/or a physical resource block (PRB), and/or a virtual resource block (VRB), and/or a beam, and/or a codebook, and/or a scrambling code, and/or the like.

In another example (3), the channel resource may include a related parameter associated with sending and/or receiving of a channel or a signal, for example, as described in the foregoing example (1) and example (2). Details are not described herein again.

### 5. Resource overlapping:

In this embodiment of this application, resource overlapping means overlapping of channel resources used for communication interaction between the terminal device and different cells (or CCs or frequency bands (bands) corresponding to the cells), and may be time domain overlapping and/or frequency domain overlapping, or may be symbol overlapping, resource block overlapping, resource element overlapping, or the like.

For example, in an overlapping manner, sending or receiving of a channel resource of at least one serving cell and sending or receiving of a channel of at least one candidate cell are overlapped in time or a symbol.

For example, in an overlapping manner, sending or receiving of a channel resource of at least one candidate cell and sending or receiving of a channel of another candidate cell are overlapped in time or a symbol.

It should be noted that overlapping may be represented by words such as a collision and a conflict. This is not limited in embodiments of this application.

The following is an example:

### (1) Time domain overlapping:

LTM switching is used as an example. A general procedure of LTM switching may include the following steps.

S1: The terminal device reports the feature to the base station.

S2: The base station configures one or more candidate cells (or referred to as neighboring cells or non-serving cells) and configures related parameters, including a measurement resource, a transmission channel, and the like.

S3: The base station then configures one or more candidate cell sets for the terminal device, to measure, report, and select a candidate cell. The candidate cell set may include a secondary serving cell (secondary serving cell), a non-serving cell (non-serving cell), and the like.

S4: The terminal device performs, based on configuration information, corresponding measurement and reporting on the candidate cell set, the activated candidate cell set, or the candidate cell set used for measurement, where possible behavior includes performing downlink synchronization before cell handover (specifically, when the terminal device communicates (or connects) to the serving cell), beam measurement and reporting, uplink synchronization, channel state information obtaining and reporting, and the like.

Because LTM switching relates to the plurality of scenarios described above, in the LTM switching scenario, before the terminal device performs cell handover, overlapping in time may be exists in information receiving and sending performed by the terminal device with the candidate cell, and information receiving and sending performed by the terminal device with the serving cell.

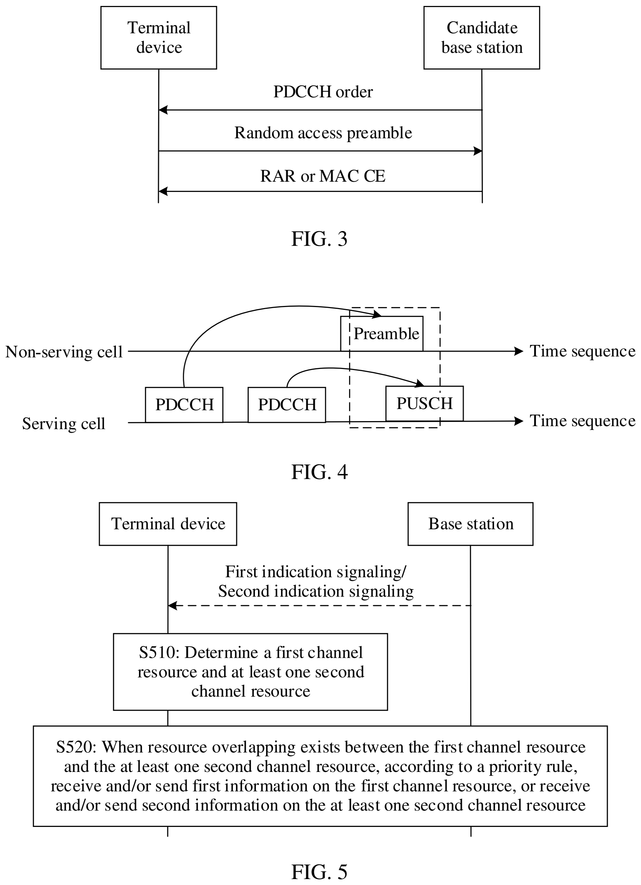

For example, a base station that manages a candidate cell (referred to as a candidate base station for short) triggers, through a PDCCH order (order), the terminal device to perform uplink synchronization with the candidate cell. As shown in FIG. 3, the candidate base station first sends the PDCCH order to the terminal device, to trigger a random access procedure of the terminal device. Then, the terminal device sends a random access preamble (preamble) to the candidate base station. Then, the terminal device monitors a random access response (random access response, RAR) or a media access control (media access control layer, MAC) control element (control element, CE) from the candidate base station. The RAR or the MAC CE carries a timing advance (timing advance, TA) of the candidate cell, which may be used by the terminal device to perform uplink synchronization with the candidate cell.

However, based on a time sequence, when the terminal device sends the random access preamble to the candidate base station, the terminal device may further receive and/or send data with the base station that manages the serving cell. As shown in FIG. 4, a dashed-line box is used to identify that the terminal device sends the random access preamble to the candidate cell, overlapping in time domain when the terminal device and the serving cell send and receive data on a physical uplink shared channel (physical uplink share channel, PUSCH).

### (2) Frequency domain overlapping:

A multi-TRP architecture is used as an example. In this architecture, the terminal device may schedule uplink data based on multi-uplink control information (uplink control information, UCI). Specifically, each TRP may separately receive the UCI sent by the terminal device. The terminal device may send uplink data to a corresponding TRP based on the UCI configured by the network device for each TRP.

Because an uplink resource is limited, PUCCH resources configured by a network device may overlap. Alternatively, when data is sent on different transmission channels, resources may overlap. As a result, when corresponding data is transmitted on these transmission channels, interference may exist between the data sent on the different transmission channels. In this case, it may also be considered that resources on these different channels collide or are overlapped. For example, a resource transmitted on a PUCCH collides or is overlapped with a resource transmitted on a PUSCH; a resource transmitted on a PUSCH collides or is overlapped with a resource transmitted on a PUSCH; a resource transmitted on a physical downlink control channel (physical downlink control channel, PDCCH) collides or is overlapped with a resource transmitted on a PDCCH; a resource transmitted on a PDCCH collides or is overlapped with a resource transmitted on a PDSCH; a resource transmitted on a PDSCH collides or is overlapped with a resource transmitted on a PDSCH; a resource transmitted on a PUCCH collides or is overlapped with a resource transmitted on a PDSCH; a resource transmitted on a PUSCH collides or is overlapped with a resource transmitted on a PDCCH; or a resource transmitted on the PUSCH collides with or is overlapped with a resource transmitted on the PDSCH.

It should be noted that the foregoing resource overlapping case is merely an example rather than any limitation. In the LTM switching scenario described above, a similar resource collision or collision case may also exist.

In this embodiment of this application, in a cell handover scenario, to reduce resource overlapping of the terminal device on different channel resources and ensure overall performance of a communication system as much as possible, in an implementation, priority information for at least one candidate cell is defined (or configured or indicated), so that, when the terminal device determines that resource overlapping occurs, the terminal device may determine, according to an adapted priority rule, resources on which transmission is to be dropped and other resources on which transmission is to be reserved, to reduce resource overlapping and ensure performance of a communication system as much as possible.

In this embodiment of this application, terms such as "drop", "terminate", "stop", and "cancel" all represent a same meaning. It may be represented that corresponding information is not sent and/or received on a corresponding channel resource.

As shown in FIG. 5, the communication method may include the following steps.

S510: A terminal device determines a first channel resource and at least one second channel resource.

In a possible implementation, the first channel resource and the at least one second channel resource are channel resources preconfigured by a base station.

For example, the terminal device may receive first indication signaling, where the first indication signaling may be RRC signaling or a DCI indication, and obtain configuration information of the first channel resource configured by the base station, so that the terminal device determines the first channel resource based on the configuration information of the first channel resource configured by the base station. The terminal device may receive second indication signaling, where the second indication signaling may be RRC signaling or a DCI indication, and obtain configuration information of the at least one second channel resource configured by the base station, so that the terminal device determines the at least one second channel resource based on the configuration information of the second channel resource configured by the base station.

The first channel resource may be associated with a serving cell or a candidate cell of the terminal device, and the terminal device may perform uplink sending or downlink receiving with the serving cell on the first channel resource. Alternatively, the terminal device may perform uplink sending or downlink receiving with the candidate cell on the first channel resource. The at least one second channel resource may be associated with a candidate cell. For example, the at least one second channel resource may be associated with different candidate cells, and the terminal device may perform uplink sending or downlink receiving with the different candidate cells on the at least one second channel resource.

It should be noted that, in this embodiment of this application, the base station is an example of a network device. In some communication system architectures, a network device that manages the serving cell and a network device that manages the candidate cell may be different devices. In some other communication system architectures, a network device that manages the serving cell and a network device that manages the candidate cell may be a same device, for example, a same CU in a CU-DU split architecture. An implementation of the base station is not limited in embodiments of this application. During specific implementation, before the base station performs configuration or indication, the terminal device may first send fifth information to a first network device, where the fifth information indicates a terminal capability, and the terminal capability may include at least one of the following: supporting LTM; or supporting simultaneous transmission and/or reception of a serving cell and a candidate cell. In this way, the first network device may perform related configuration or indication for the terminal device based on the received fifth information.

The terminal device may receive and/or send first information on the first channel resource. The terminal device may receive and/or send second information on the at least one second channel resource.

For example, the first information may include a first channel and/or a first signal, and the second information may include a second channel and/or a second signal. The first channel or the second channel may correspond to any one of the following: a PDSCH, a PDCCH, a PUCCH, a PRACH, or a PUSCH. The first signal or the second signal corresponds to any one of the following: an SSB, a CSI-RS, a TRS, an SRS, or a random access preamble. Alternatively, for example, the first information may include measurement result reporting information, for example, CSI (including at least one of an RI, a PMI, a CQI, and the like). Alternatively, the first information may further include a beam measurement result, for example, L1-RSRP or an L1-SINR. Alternatively, the first information may further include HARQ-ACK or NACK information. Alternatively, the first information may further include an SR. Alternatively, the first information may further include information carried in other UCI. Alternatively, the first information may further include DCI information.

S520: When resource overlapping exists between the first channel resource and the at least one second channel resource, according to a priority rule, the terminal device receives and/or sends the first information on the first channel resource, or receives and/or sends the second information on the at least one second channel resource.

For example, that resource overlapping exists between the first channel resource and the at least one second channel resource may include the following cases:

Resource overlapping exists between the first channel and the second channel;
resource overlapping exists between the first channel and the second signal;
resource overlapping exists between the first signal and the second channel; and
resource overlapping exists between the first signal and the second signal.

In this embodiment of this application, the priority rule may be defined in a protocol. For example, the priority rule may include: when resource overlapping exists between the first channel resource and the at least one second channel resource, performing uplink sending or downlink receiving on a third channel resource in the first channel resource and the at least one second channel resource based on first priority information.

The third channel resource is a high-priority channel resource in the first channel resource and the at least one second channel resource. The high-priority channel resource may mean, for example, that the third channel resource corresponds to a high priority, or may mean that information sent or received on the third channel resource corresponds to a high priority, or may mean that a channel and/or a signal sent or received on the third channel resource may correspond to a high priority, or may mean that information associated with the third channel resource may correspond to a high priority. The information associated with the third channel resource may be a frequency band, a bandwidth part (Bandwidth part, BWP), a cell, a TRP, or the like on which the third channel resource is located. This is not limited in embodiments of this application.

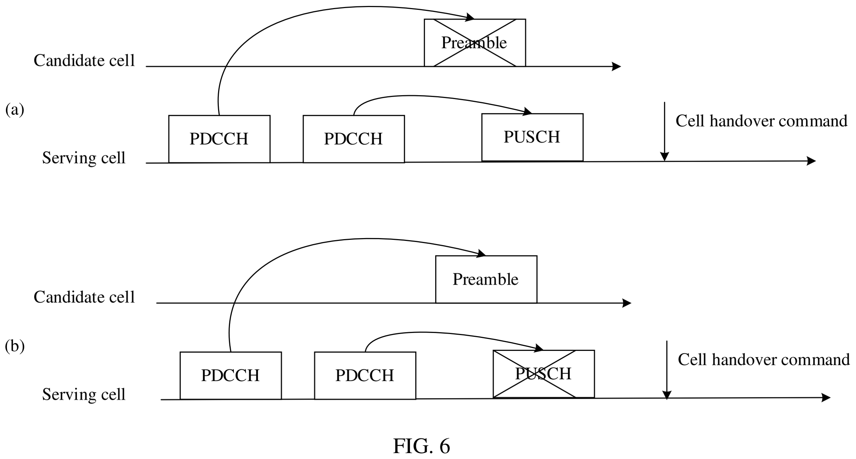

For example, as shown in FIG. 6, time domain resource overlapping exists when the terminal device performs uplink synchronization with the candidate cell. In a case (a), if a priority associated with the serving cell is higher than a priority associated with the candidate cell, when resource overlapping exists between a channel resource of the serving cell and a channel resource of the candidate cell, the terminal device performs uplink transmission on the channel resource of the serving cell, for example, performs transmission through a PUSCH, and drops transmission on the channel resource of the candidate cell, for example, stops (or suspends) sending a random access preamble to the candidate cell. In a case (b), if a priority associated with the candidate cell is higher than a priority associated with the serving cell, when resource overlapping exists between a channel resource of the serving cell and a channel resource of the candidate cell, the terminal device performs transmission on the channel resource of the candidate cell, for example, sends a random access preamble to a base station that manages the candidate cell, and drops transmission on the channel resource of the serving cell, for example, stops (or suspends) transmission with the serving cell through a PUSCH.

In this case, the terminal device may adapt to different priority rules based on different scenarios, to perform different transmission in different scenarios through flexible scheduling, thereby ensuring performance of a communication system as much as possible.

Further, a channel resource used by the terminal device to perform uplink sending or downlink receiving may include a periodic resource, a semi-persistent resource, and an aperiodic resource. To implement more refined and more flexible scheduling, the first priority information in this embodiment of this application may further include at least one of the following: A priority of first information aperiodically sent or received is higher than a priority of second information semi-persistently sent or received; a priority of first information aperiodically sent or received is higher than a priority of second information periodically sent or received; a priority of first information semi-persistently sent or received is higher than a priority of second information periodically sent or received; a priority of second information aperiodically sent or received is higher than a priority of first information semi-persistently sent or received; a priority of second information aperiodically sent or received is higher than a priority of first information periodically sent or received; or a priority of second information semi-persistently sent or received is higher than a priority of first information periodically sent or received. In another example, the first priority information may further include: a priority of a channel resource corresponding to a data channel is higher than a priority of a channel resource corresponding to a signal. For example, as shown below, a priority of the PDCCH is higher than a priority of the PDSCH, and a priority of the PDSCH is higher than a priority of the CSI-RS/SSB. Alternatively, for example, a priority of the PUCCH is higher than a priority of the PUSCH, and a priority of the PUSCH is higher than a priority of the SRS.

Therefore, when the terminal device determines that sent resources are overlapped, the terminal device may determine the third channel resource from the first channel resource and the at least one second channel resource based on a specific overlapping case, perform uplink sending or downlink receiving on the third channel resource, and drop transmission on a high-priority channel resource.

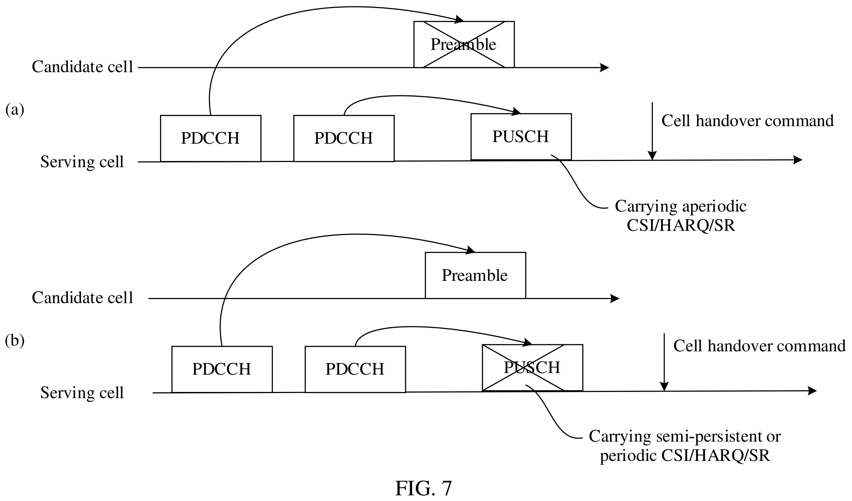

For example, as shown in (a) in FIG. 7, if the first channel resource is associated with a serving cell, and the at least one second channel resource is associated with a candidate cell, when the terminal device sends a random access preamble to the candidate cell on the at least one second channel resource, a conflict occurs when the terminal device further sends a PUSCH or a PUCCH to the serving cell on the first channel resource, and the PUSCH or the PUCCH carries aperiodic CSI/HARQ/SR. In this conflict case, because a priority of the aperiodic channel resource is high, to ensure service implementation of the terminal device, the terminal device may send a PUSCH or a PUCCH to the serving cell on the first channel resource, and stop (or suspend) sending of the random access preamble to the candidate cell on the at least one second channel resource.

Alternatively, for example, as shown by the terminal (b) in FIG. 7, if the first channel resource is associated with a serving cell, and the at least one second channel resource is associated with a candidate cell, when the terminal device sends a random access preamble to the candidate cell on the at least one second channel resource, a conflict occurs when the terminal device further sends a PUSCH or a PUCCH to the serving cell on the first channel resource, and the PUSCH or the PUCCH carries semi-persistent or periodic CSI/HARQ/SR. In this conflict case, because a priority of the semi-persistent channel resource or the periodic channel resource is low, to reduce a switching delay, the terminal device may send a random access preamble to the candidate cell on the at least one second channel resource, and drop PUSCH or PUCCH transmission on the first channel resource.

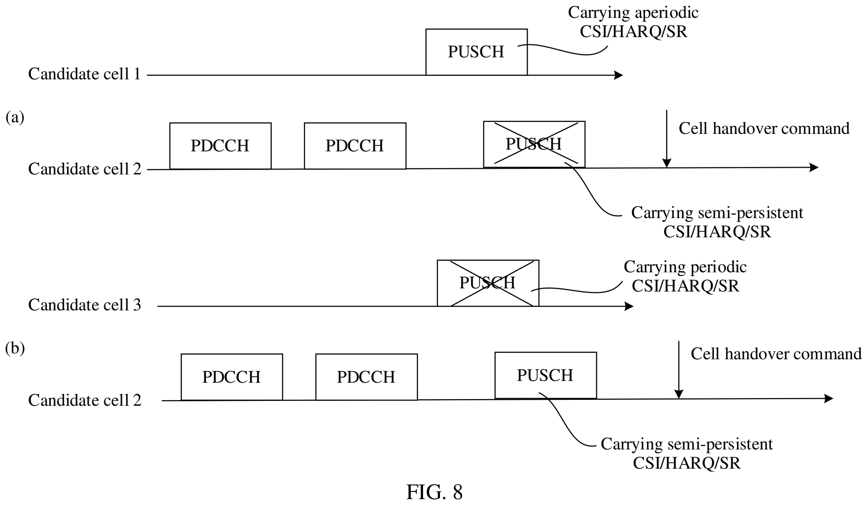

In another example, as shown in (a) in FIG. 8, if the first channel resource is associated with a candidate cell 1, and the at least one second channel resource is associated with another candidate cell 2, when the terminal device sends PUSCHs or PUCCHs to different candidate cells, if a PUSCH or a PUCCH sent by the terminal device to the candidate cell 1 carries aperiodic CSI/HARQ/SR, a PUSCH or a PUCCH sent by the terminal device to the candidate cell 2 carries semi-persistent CSI/HARQ/SR. Because a priority of an aperiodic channel resource is higher than a priority of a semi-persistent channel resource, the terminal device may send the PUSCH or the PUCCH to the candidate cell 1, and stop (or suspend) sending the PUSCH or the PUCCH to the candidate cell 2.

Alternatively, as shown in (b) in FIG. 8, if the first channel resource is associated with a candidate cell 3, and the at least one second channel resource is associated with another candidate cell 2, when the terminal device sends PUSCHs or PUCCHs to different candidate cells, if a PUSCH or a PUCCH sent by the terminal device to the candidate cell 3 carries periodic CSI/HARQ/SR, a PUSCH or a PUCCH sent by the terminal device to the candidate cell 2 carries semi-persistent CSI/HARQ/SR. Because a priority of a semi-persistent channel resource is higher than a priority of a periodic channel resource, the terminal device may send the PUSCH or the PUCCH to the candidate cell 3, and stop (or suspend) sending the PUSCH or the PUCCH to the candidate cell 2.

It should be understood that this is merely an example description of resource overlapping and a solution for uplink synchronization, and does not constitute any limitation. In another embodiment, the terminal device may determine, based on a predefined priority rule and priority information associated with different cells, how to perform uplink transmission or downlink transmission. Details are not described herein again.

It should be noted that, in this embodiment of this application, priorities associated with different cells may be represented through a priority factor. The priority factor may be defined in a protocol, or may be predefined, or may be configured by the base station, or may be indicated by the base station. This is not limited in embodiments of this application.

For example, the base station configures or indicates the priority factor of the cell. When the foregoing method is implemented, the terminal device may further receive third information from the first network device. The first network device may be configured to configure or indicate at least one candidate cell, the third information may indicate priority information associated with the at least one candidate cell.

It should be understood that, during specific implementation, the third information may be carried in RRC signaling, DCI signaling, or a MAC CE from the base station, and the third information may be carried in a newly added bit of corresponding signaling, or may be carried in a reserved bit of corresponding signaling. A configuration manner or an indication manner of the priority factor is not limited in embodiments of this application.

In another example, the base station configures or indicates the priority factor. When the foregoing method is implemented, the terminal device may further receive fourth information from the first network device. The first network device is configured to configure or indicate at least one candidate cell, the fourth information indicates priority information associated with the first information and/or the second information. Similar to an implementation of the third information, during specific implementation, the fourth information may alternatively be carried in RRC signaling, DCI signaling, or a MAC CE from the base station. Alternatively, in another example, the fourth information may be the same as the third information. Details are not described herein again.

In another example, the terminal device may alternatively determine different priorities for a same overlapping case, and send or receive different channels and/or signals based on the different priorities.

For example, the serving cell may configure the first information sent or received on the first channel resource to have a high priority, and notify the terminal device of a case in which the first information is configured to have the high priority. When the first information sent or received on the first channel resource and the second information sent or received on the second channel resource are overlapped, the terminal device or the base station may send or receive the first information on the first channel resource, and drop the second information sent or received on the second channel resource.

In another example, the serving cell configures the first information sent or received on the first channel resource to have a low priority, and notifies the terminal device of a case in which the first information is configured to have the low priority. When the first information sent or received on the first channel resource and the second information sent or received on the second channel resource are overlapped, the terminal device or the base station may send or receive the second information on the second channel resource, and drop the first information sent or received on the first channel resource.

For the foregoing configuration, for example, a priority identifier 0 or 1 may indicate a priority factor. If the priority identifier 1 is configured for the serving cell or the candidate cell associated with the first channel resource, it indicates the high priority; or if the priority identifier 0 is configured, it indicates the low priority.

The priority may be configured, may be predetermined, or may be agreed on in a protocol.

Different priorities are determined for a same overlapping case, so that the base station can perform flexible scheduling. The base station may select different priority configurations based on service urgency or system performance. For example, the terminal device sends a random procedure in the candidate cell to obtain a TA value of the candidate cell. Resource overlapping exists between preamble sending, a TA indication, or RA receiving corresponding to the random access procedure and a channel or a signal of a serving cell. The base station may configure a high priority for transmission and/or reception of the candidate cell based on different emergency degrees, for example, if performance of the terminal in the serving cell is extremely poor and the terminal needs to be quickly handed over to the candidate cell, to ensure smooth transmission and/or reception of the candidate cell. If performance of the terminal in the serving cell is not poor, or to obtain candidate cell information in advance, the base station may configure the low priority for transmission and/or reception of the candidate cell, to ensure smooth transmission and/or reception of the serving cell. In this way, according to the foregoing method, based on the priority rule and the priority information associated with different cells, the terminal device may adapt to different scheduling manners in different scenarios, to preferentially ensure communication between the terminal device and the serving cell when a service needs to be ensured, to preferentially ensure communication between the terminal device and the candidate cell when a low handover delay needs to be ensured, to ensure overall performance of a communication system.

It should be understood that the foregoing is described only by using a case in which time domain resource overlapping exists when the terminal device performs uplink synchronization with the candidate cell as an example, and an applicable scenario of the communication method in embodiments of this application is not limited. In another scenario that may be related to LTM switching, for example, downlink synchronization, beam management, or channel quality measurement, the method in this embodiment of this application may also be used. When resource overlapping is involved in uplink sending or downlink receiving of the terminal device, priority information is predefined, configured, or indicated, resources on which transmission is to be performed are determined based on an adapted priority rule, to prevent, as much as possible, the terminal device from concurrently performing uplink sending or downlink receiving by using a channel resource in which a collision or a collision occurs, and ensure overall performance of a communication system as much as possible.

In addition, in this embodiment of this application, the serving cell may have one or more carriers. For example, in a CA scenario, the one or more carriers may be in a same frequency band or different frequency bands, and the terminal device may perform transmission and/or reception on the one or more carriers. In addition, the candidate cell may also have one or more carriers. The one or more carriers may be on a same frequency band or different frequency bands. The one or more carriers may be on a same frequency layer or different frequency layers. The terminal device may perform transmission and/or reception on the one or more carriers.

When sending or receiving is performed in the serving cell and/or the candidate cell on at least two carriers, if channel resource overlapping exists, sending and/or receiving is performed according to the foregoing priority rule. If intervals between sending and/or receiving of channel resources are different, the terminal device has different behavior. The interval may be configured by the base station. In addition, in the interval, whether the base station performs data scheduling sending and/or receiving on different carriers depends on implementation of the base station. However, terminal devices with different capabilities do not necessarily have a data sending and/or receiving capability. In addition, the terminal behavior in the interval is not defined. Therefore, corresponding capabilities and corresponding terminal behavior need to be defined to resolve the foregoing problems.

In addition, there is a priority rule in which overlapping exists in the foregoing channel resources, and for terminals with different capabilities, terminal behavior may be different. For example, if the terminal device can simultaneously perform transmission and/or reception on the at least two configured, indicated, or activated carriers, the terminal device may simultaneously perform transmission and/or reception on all the configured, indicated, or activated carriers without using the foregoing priority rule, all carriers may belong to a serving cell and/or a candidate cell. However, if the terminal device cannot simultaneously perform transmission and/or reception on the at least two configured, indicated, or activated carriers, or can simultaneously perform transmission and/or reception on only some carriers, the terminal device needs to indicate carriers and/or frequency bands in which the carriers are located and/or frequency layers in which the carriers are located that can be simultaneously received and/or sent. The foregoing priority rules are used on carriers that cannot be sent and/or received simultaneously. In this way, the terminal device may simultaneously perform transmission and/or reception on carriers that support simultaneous transmission and/or reception, and all the carriers may belong to a serving cell and/or a candidate cell.

The following describes a corresponding solution with reference to a specific case.

For details about a frequency band, intra-frequency, and inter-frequency, see 3GPP TS 38.101. In this embodiment of this application, that transmission and/or reception cannot be simultaneously performed may be represented as that the serving cell and/or the candidate cell cannot simultaneously perform transmission and/or reception, may also be represented as that the candidate cells cannot simultaneously perform transmission and/or reception, may also be represented as that the candidate cell cannot perform transmission and/or reception, may be represented as that the serving cell cannot perform transmission and/or reception, or may also be represented as that the cell cannot perform transmission and/or reception, that is, may be replaced with the foregoing different expressions.

Simultaneous transmission and/or reception may be performed for an intra-frequency band (intra-band), an intra-frequency band combination, or a pass-frequency band group. For example, the serving cell and the candidate cell belong to a same frequency band. Optionally, the terminal device may report, to the base station, that simultaneous transmission and/or reception is not supported for the intra-frequency band (intra-band), the intra-frequency band combination, or the pass-frequency band group.

Simultaneous transmission and/or reception may be performed for an inter-frequency band (inter-band), an inter-frequency band combination, or an inter-frequency band group. For example, the serving cell and the candidate cell belong to different frequency bands. Optionally, the terminal device may report, to the base station, that simultaneous transmission and/or reception is supported for the inter-frequency (inter-band) band, the inter-frequency band combination, or the inter-frequency band group.

The foregoing frequency band may be replaced with a carrier. The capability reporting granularity may be at least one of the following: reporting per UE, and/or reporting per frequency band, and/or reporting per frequency band combination, and/or reporting per frequency band group, and/or reporting per carrier. Based on different reporting granularities, the terminal can maximize complexity and effective utilization of resource efficiency.

The terminal device may report at least one of the following:
a cell or a cell set that is not activated for transmission and/or reception; a cell or a cell set that is activated for transmission and/or reception; a cell or a cell set that is not configured for transmission and/or reception; a cell or a cell set that is configured for transmission and/or reception; a cell or a cell set that is unable to transmit and/or receive; a cell or a cell set that is able to transmit and/or receive; a frequency band group or a quantity of frequency band groups that cannot support simultaneous transmission and/or reception; a frequency layer or a quantity of frequency layers that cannot support simultaneous transmission and/or reception; a frequency layer or a quantity of frequency layers that can support simultaneous transmission and/or reception; a frequency band group or a quantity of frequency band groups that cannot support simultaneous transmission and/or reception; a frequency band group or a quantity of frequency band groups that can support simultaneous transmission and/or reception; a frequency band combination or a quantity of frequency band combinations that cannot support simultaneous transmission and/or reception; a frequency band combination or a quantity of frequency band combinations that can support simultaneous transmission and/or reception; a frequency band or a quantity of frequency bands that cannot support simultaneous transmission and/or reception; a frequency band or a quantity of frequency bands that can support simultaneous transmission and/or reception; a carrier or a quantity of carriers that cannot support simultaneous transmission and/or reception; a carrier or a quantity of carriers that can support simultaneous transmission and/or reception; a channel or a quantity of channels that cannot support simultaneous transmission and/or reception; a channel or a quantity of channels that can support simultaneous transmission and/or reception; an incapability to simultaneously transmit and/or receive; a port or a quantity of ports that can support simultaneous transmission and/or reception; a radio frequency chain, radio frequency branch, or corresponding quantity that cannot support simultaneous transmission and/or reception; a radio frequency chain, radio frequency branch, or corresponding quantity that can support simultaneous transmission and/or reception; a maximum quantity of layers that cannot support simultaneous transmission and/or reception; a maximum quantity of layers that can support simultaneous transmission and/or reception; a quantity of layers that cannot support simultaneous transmission and/or reception; a quantity of layers that can support simultaneous transmission and/or reception; a panel or a quantity of panels that cannot support simultaneous transmission and/or reception; a panel or a quantity of panels that can support simultaneous transmission and/or reception; a maximum quantity of ranks that cannot support simultaneous transmission and/or reception; a maximum quantity of ranks that can support simultaneous transmission and/or reception; a quantity of ranks that cannot support simultaneous transmission and/or reception; a quantity of ranks that can support simultaneous transmission and/or reception; or the channel may be a reception channel, a transmission channel, or a transceiver channel. The port may be a receive port, a transmit port, or a receive/transmit port.

The radio frequency chain or the radio frequency branch may be a receive radio frequency chain or a radio frequency branch, may be a transmit radio frequency chain or a radio frequency branch, or may be a receive/transmit radio frequency chain or a radio frequency branch. A reporting manner may be reporting through RRC, a MAC-CE, or DCI.

When a candidate cell reference signal is sent at any time (optionally, including interruption time of handover between a candidate cell and a serving cell) and a PUSCH, a PUCCH, or a PRACH sent in the serving cell is overlapped, and the PUSCH or the PUCCH carries one or more of the following: HARQ information, a positive SR, and an RI, the CRI, the SSBRI, and when information about the sent PUSCH, PUCCH, or PRACH exceeds the foregoing reporting capability (that is, the PUSCH, PUCCH, or PRACH cannot be simultaneously sent and/or received), the reference signal of the candidate cell is not sent. Alternatively, the SRS is sent when the reporting capability is not exceeded.

When a candidate cell reference signal is sent at any time (optionally, including interruption time of handover between the candidate cell and the serving cell) and is overlapped with a PUSCH, a PUCCH, or an SRS of the serving cell,
the PUSCH or the PUCCH carries semi-persistent or periodic CSI. When the CSI may include one or more of the following: a CQI, a PMI, an L1-SINR, and an L1-RSRP, and when the information about a sent PUSCH, PUCCH, or PRACH exceeds the reporting capability, a PUSCH, a PUCCH, or an SRS in a serving cell is not sent. Alternatively, when the reporting capability is not exceeded, the reference signal of the candidate cell is sent.

When an aperiodic reference signal of the candidate cell is sent at any time (including interruption time of SRS carrier switching) and the PUSCH, the PUCCH, or the SRS sent in the serving cell is overlapped, the PUSCH or the PUCCH carries aperiodic CSI. When the CSI may include one or more of the following: a CQI, a PMI, an L1-SINR, and an L1-RSRP, and when information about a sent PUSCH, PUCCH, or PRACH exceeds the reporting capability, a PUSCH, a PUCCH, or an SRS sent on another carrier that is sent in a serving cell is not sent. Alternatively, when the reporting capability is not exceeded, the aperiodic reference signal of the candidate cell is sent.

Overlapping may be time domain overlapping and/or frequency domain overlapping, or may be symbol overlapping, resource block overlapping, or resource element overlapping. Behavior on a terminal device side is consistent with that described above.

For the interval problem, terminals with different capabilities have different behavior. Reporting at least one of the following: only supporting that a first interval is greater than or equal to a first threshold; only supporting that a first interval is greater than a first threshold; only supporting that a first interval is less than a first threshold; supporting both that a first interval is greater than or equal to a first threshold and that the first interval is less than the first threshold; only supporting serving cell handover; only supporting staying in the candidate cell; supporting both handover back to the serving cell and staying in the candidate cell; only supporting handover back to the serving cell when a first interval is greater than or equal to a first threshold; only supporting staying in the candidate cell when a first interval is greater than a first threshold; or supporting both handover back to the serving cell when a first interval is greater than or equal to a first threshold, and staying in the candidate cell when the first interval is less than the first threshold. A reporting manner may be in one or more manners of RRC, MAC-CE, UCI, a data channel, or a control channel. For example, a terminal capability item is defined, and the capability item includes:
information (or referred to as a component, the same below) 1: only supporting that the first interval is greater than or equal to the first threshold;
information 2: only supporting that the first interval is less than only the first threshold; and
information 3: supporting that the first interval is greater than or equal to the first threshold, and that the first interval is less than the first threshold.

For another example, a terminal capability item is defined, and the capability item includes:
information 1: only supporting that the first interval is greater than or equal to the first threshold;
information 2: only supporting that the first interval is less than only the first threshold; and
when the capability item is not reported, it may be understood that both the first interval being greater than or equal to the first threshold and the first interval being less than the first threshold are supported.

For another example, a terminal capability item is defined, and the capability item includes:
information 1: only supporting handover back to the serving cell when the first interval is greater than or equal to the first threshold;
information 2: only supporting staying in the candidate cell when the first interval is greater than the first threshold; and
information 3: supporting both handover back to the serving cell when the first interval is greater than or equal to the first threshold, and staying in the candidate cell when the first interval is less than the first threshold.

For another example, a terminal capability item is defined, and the capability item includes:
information 1: only supporting handover back to the serving cell when the first interval is greater than or equal to the first threshold;
information 2: only supporting staying in the candidate cell when the first interval is greater than the first threshold; and
when the capability item is not reported, it may be understood that both handover back to the serving cell when the first interval is greater than or equal to the first threshold, and staying in the candidate cell when the first interval is less than the first threshold are supported.

For another example, a terminal capability item is defined, and the capability item includes:
information 1: only supporting handover back to the serving cell;
information 2: only supporting staying in the candidate cell; and
information 3: supporting both handover back to the serving cell and staying in the candidate cell.

For another example, a terminal capability item is defined, and the capability item includes:
information 1: only supporting handover back to the serving cell;
information 2: only supporting staying in the candidate cell; and
if this capability item is not reported, both handover back to the serving cell and staying in the candidate cell are supported.

It should be understood that the foregoing information index sequence is merely an example, and does not constitute a limitation on an implementation of the information index sequence.

The communication method described in this embodiment of this application may further include the following steps.

Sixth information is obtained, where the sixth information indicates information about time and/or frequency of the first channel resource and/or the second channel resource; and the first interval between the first channel resource and the second channel resource based on the sixth information is determined.

The terminal device or the network device may determine subsequent behavior based on the first interval.

For example, when the terminal device reports: only supporting that the first interval is greater than or equal to the first threshold, and when the first interval is greater than or equal to the first threshold, the terminal device may be handed over to the serving cell in the first interval.

Alternatively, for example, when the terminal device reports: only supporting that the first interval is greater than the first threshold, and when the first interval is greater than the first threshold, the terminal device is handed over to the serving cell in the first interval.

Alternatively, for example, when the terminal reports: only supporting that the first interval is less than the first threshold, or only supporting staying in the candidate cell, and when the first interval is less than the first threshold, the terminal stays in the candidate cell in the first interval. The stay may be understood as not being handed over to the serving cell. The stay may also be understood as a handover process that is kept in a current candidate cell or that is not handed over to another carrier.

Alternatively, for example, when the terminal device reports: supporting both that the first interval is greater than or equal to the first threshold and that the first interval is less than the first threshold,
and when the first interval is greater than or equal to the first threshold, the terminal device is handed over to the serving cell in the first interval; or
when the first interval is less than the first threshold, the terminal device stays in the candidate cell in the first interval, the stay may be understood as not being handed over to the serving cell; and the stay may also be understood as a handover process that is kept in a current candidate cell or that is not handed over to another carrier; or
when the first interval is greater than the first threshold, the terminal device is handed over to the serving cell in the first interval.

When the terminal device reports: supporting both handover back to the serving cell and staying in the candidate cell,
and when the first interval is greater than or equal to the first threshold, the terminal device is handed over to the serving cell in the first interval; or
when the first interval is less than the first threshold, the terminal device stays in the candidate cell in the first interval, the stay may be understood as not being handed over to the serving cell; and the stay may also be understood as a handover process that is kept in a current candidate cell or that is not handed over to another carrier; or
when the first interval is greater than the first threshold, the terminal device is handed over to the serving cell in the first interval.

When the terminal device reports: only supporting handover back to the serving cell when the first interval is greater than or equal to the first threshold, the terminal device is handed over to the serving cell in the first interval.

When the terminal device reports: only supporting handover back to the serving cell when the first interval is greater than the first threshold, the terminal device is handed over to the serving cell in the first interval.

When the terminal device reports: only supporting handover back to the candidate cell when the first interval is greater than the first threshold, and when the first interval is less than the first threshold, the terminal device stays in the candidate cell in the first interval. The stay may be understood as not being handed over to the serving cell. The stay may also be understood as a handover process that is kept in a current candidate cell or that is not handed over to another carrier.

When the terminal device reports: supporting both handover back to the serving cell when the first interval is greater than or equal to the first threshold; and staying in the candidate cell when the first interval is less than the first threshold,
and when the first interval is greater than or equal to the first threshold, the terminal device is handed over to the serving cell in the first interval; or
when the first interval is less than the first threshold, the terminal device stays in the candidate cell in the first interval, the stay may be understood as not being handed over to the serving cell, and the stay may also be understood as a handover process that is kept in a current candidate cell or that is not handed over to another carrier; or
when the first interval is greater than the first threshold, the terminal device is handed over to the serving cell in the first interval.

In an example, the first interval is an interval between the first channel resource and the second channel resource; or
the first interval may be an interval between an M^{th} resource of the first channel resource and an N^{th} resource of the second channel resource; or
the first interval may be an interval between an end of a P^{th} symbol in an M^{th} resource of the first channel resource and a start of a Q^{th} symbol in an N^{th} resource of the second channel resource; or
the first interval may be an interval between a P^{th} resource element of an M^{th} resource in the first channel resource and a Q^{th} resource element of an N^{th} resource in the second channel resource; or
the first interval may be an interval between a P^{th} physical resource block of an M^{th} resource in the first channel resource and a Q^{th} physical resource block of an N^{th} resource in the second channel resource; or
the first interval may be a gap between the first resource and the second resource; or
the first interval may be an interval between an end of a P^{th} symbol of the first resource and a start of a Q^{th} symbol of the second resource; or
the first interval may be an interval between a P^{th} resource element of the first resource and a Q^{th} resource element of the second resource; or
the first interval may be an interval between a P^{th} physical resource block of the first resource and a Q^{th} physical resource block of the second resource; or
the first interval may be an interval between the first channel resource and the second channel resource.

M, N, P, and Q are integers.

The interval may be one or more of the following: an interval (Interval, gap, period), a guard period (guard period), interruption time (Interruption time), a time period (time period), a time interval (time interval), a time period (period), a frequency interval (frequency interval), a frequency band interval (frequency band interval), a physical resource block interval (Physical resource block interval), a physical resource element interval (Physical Resource element interval), a carrier interval (carrier component interval or carrier interval), a resource block interval (Resource interval), and a resource element interval (Physical Resource element interval). A counting unit of the first interval may be a time unit, a frequency unit, or a symbol, a slot, a subframe, a radio frame, a super frame, and the like. The first interval may have an association relationship with an SCS and the like.

The first threshold may be configured or indicated by the base station, or may be predefined. The first threshold may be one or more of the following, or may be associated with one or more of the following: carrier switching time; carrier switching interruption time; carrier switching RF interruption time; uplink sending interruption time affected by carrier switching; downlink receiving interruption time affected by carrier switching; antenna switching interruption time; antenna switching RF interruption time; uplink sending interruption time affected by antenna switching; downlink receiving interruption time affected by antenna switching; time for handover from a serving cell to a candidate cell; time for handover from a candidate cell to a serving cell; BWP switching time; candidate cell handover time; and cell handover time.

For example, the first threshold may be a sum of the uplink sending interruption time affected by carrier switching and the downlink receiving interruption time affected by carrier switching. For another example, the first threshold may be twice the carrier switching RF interruption time. For another example, the first threshold is a sum of the time for handover from the serving cell to the candidate cell and the time for handover from the candidate cell to the serving cell. A value of the first threshold may be configured or indicated by the base station, or may be predefined. The value may be one of the following, a multiple of the following, or a combination of a plurality of the following: 0, 30, 100, 140, 200, 300, 500, 650, 750, 800, 900, 1000, and 1200. A value is a microsecond (µs), a symbol, or a slot. The combination may be understood as accumulation or multiplication and addition between a plurality of items.

These values usually meet single time or accumulated time of the RF switching time, carrier configuration and loading time, the carrier switching time, or antenna switching time of the terminal device.

When the first threshold is met, the terminal device may perform a corresponding operation. When the first threshold is not met, the terminal cannot perform a corresponding operation.

Terminals with different capabilities are distinguished based on the foregoing capability definitions. The base station may perform scheduling and transmission in different scenarios based on different reported capabilities, supporting transmission for terminal devices with different capabilities and enabling flexible scheduling, to improve system performance. For example, when the terminal reports: only supporting that the first time period is greater than or equal to the first threshold, or only supporting handover to the serving cell, or only supporting handover to the serving cell when the first time period is greater than the first threshold, the base station cannot schedule the first time period to be less than the first threshold. Otherwise, the terminal cannot perform a corresponding operation, and system performance is reduced.

Similarly, method steps performed on a network device side may include the following: receiving at least one of the following: only supporting that the first interval is greater than or equal to the first threshold; only supporting that the first interval is greater than the first threshold; only supporting that the first interval is less than the first threshold; supporting that the first interval is greater than or equal to the first threshold and that the first interval is less than the first threshold; only supporting handover back to the serving cell; only supporting staying in the candidate cell; supporting both handover back to the serving cell and staying in the candidate cell; only supporting handover back to the serving cell when the first interval is greater than or equal to the first threshold; only supporting staying in the candidate cell when the first interval is greater than the first threshold; or supporting both handover back to the serving cell when the first interval is greater than or equal to the first threshold and supporting staying in the candidate cell when the first interval is less than the first threshold.

A receiving manner may be one or more of RRC, a MAC-CE, UCI, a data channel, or a control channel. For example, a terminal capability item is defined. The capability item includes: information 1: only supporting that the first interval is greater than or equal to the first threshold; information 2: only supporting that the first interval is less than the first threshold; and information 3: supporting both that the first interval is greater than or equal to the first threshold and that the first interval is less than the first threshold.

For another example, a terminal capability item is defined, and the capability item includes:
information 1: only supporting that the first interval is greater than or equal to the first threshold;
information 2: only supporting that the first interval is less than only the first threshold; and
when the capability item is not reported, it may be understood that both the first interval being greater than or equal to the first threshold and the first interval being less than the first threshold are supported.

For another example, a terminal capability item is defined, and the capability item includes:
information 1: only supporting handover back to the serving cell when the first interval is greater than or equal to the first threshold;
information 2: only supporting staying in the candidate cell when the first interval is greater than the first threshold; and
information 3: supporting both handover back to the serving cell when the first interval is greater than or equal to the first threshold, and staying in the candidate cell when the first interval is less than the first threshold.

For another example, a terminal capability item is defined, and the capability item includes:
information 1: only supporting handover back to the serving cell when the first interval is greater than or equal to the first threshold;
information 2: only supporting staying in the candidate cell when the first interval is greater than the first threshold; and
when the capability item is not reported, it may be understood that both handover back to the serving cell when the first interval is greater than or equal to the first threshold, and staying in the candidate cell when the first interval is less than the first threshold are supported.

For another example, a terminal capability item is defined, and the capability item includes:
information 1: only supporting handover back to the serving cell;
information 2: only supporting staying in the candidate cell; and
information 3: supporting both handover back to the serving cell and staying in the candidate cell.

For another example, a terminal capability item is defined, and the capability item includes:
information 1: only supporting handover back to the serving cell;
information 2: only supporting staying in the candidate cell; and
if this capability item is not reported, both handover back to the serving cell and staying in the candidate cell are supported.

The foregoing component index sequence is not limited, and is merely used as an example.

Sixth information is received, where the sixth information indicates information about time and/or frequency of the first channel resource and/or the second channel resource.

When the terminal device reports: only supporting that the first interval is greater than or equal to the first threshold, the first interval is greater than or equal to the first threshold.

When the terminal device reports: only supporting that the first interval is greater than or equal to the first threshold, the first interval is greater than the first threshold.

When the terminal device reports: only supporting that the first interval is less than the first threshold, or only supporting staying in the candidate cell, the first interval is less than the first threshold.

When the terminal device reports: supporting both that the first interval is greater than or equal to the first threshold and that the first interval is less than the first threshold,
the first interval is greater than or equal to the first threshold, or the first interval is less than the first threshold.

When the terminal device reports: supporting both handover back to the serving cell and staying in the candidate cell,
the first interval is greater than or equal to the first threshold, or the first interval is less than the first threshold.

The first interval may be an interval between the first channel resource and the second channel resource; or
the first interval may be an interval between an M^{th} resource of the first channel resource and an N^{th} resource of the second channel resource; or
the first interval may be an interval between an end of a P^{th} symbol in an M^{th} resource of the first channel resource and a start of a Q^{th} symbol in an N^{th} resource of the second channel resource; or
the first interval may be an interval between a P^{th} resource element of an M^{th} resource in the first channel resource and a Q^{th} resource element of an N^{th} resource in the second channel resource; or
the first interval may be an interval between a P^{th} physical resource block of an M^{th} resource in the first channel resource and a Q^{th} physical resource block of an N^{th} resource in the second channel resource; or
the first interval may be a gap between the first resource and the second resource; or
the first interval may be an interval between an end of a P^{th} symbol of the first resource and a start of a Q^{th} symbol of the second resource; or
the first interval may be an interval between a P^{th} resource element of the first resource and a Q^{th} resource element of the second resource; or
the first interval may be an interval between a P^{th} physical resource block of the first resource and a Q^{th} physical resource block of the second resource.

Alternatively, the first interval may be an interval between the first resource group and the second resource group. M, N, P, and Q are integers. The interval may be one or more of the following: an interval (Interval, gap, period), a guard period (guard period), interruption time (Interruption time), a time period (time period), a time interval (time interval), a time period (period), a frequency interval (frequency interval), a frequency band interval (frequency band interval), a physical resource block interval (Physical resource block interval), a physical resource element interval (Physical Resource element interval), a carrier interval (carrier component interval or carrier interval), a resource block interval (Resource interval), and a resource element interval (Physical Resource element interval). A counting unit of the first interval may be a time unit, a frequency unit, or a symbol, a slot, a subframe, a radio frame, a super frame, and the like. The first interval has an association relationship with an SCS and the like.

An embodiment of this application further provides a communication apparatus. The communication apparatus is configured to perform the method performed by the terminal device or the network device (for example, the base station) in the foregoing method embodiments. For related features, refer to the foregoing method embodiments. Details are not described herein again.

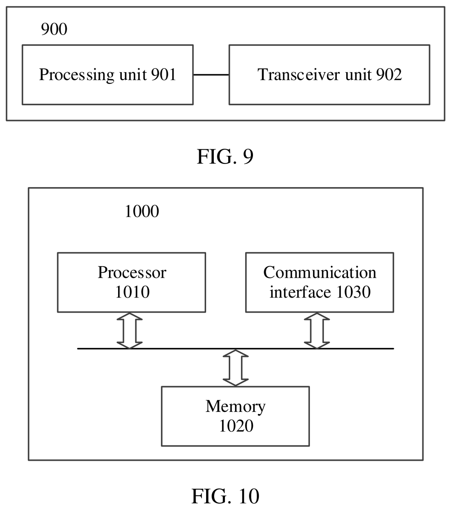

As shown in FIG. 9, the communication apparatus 900 may perform the method performed by the terminal device, and the communication apparatus may include: a processing unit 901, configured to determine a first channel resource and at least one second channel resource, where the first channel resource is used to receive and/or send first information, and the second channel resource is used to receive and/or send second information; and a transceiver unit 902, configured to: when resource overlapping exists between the first channel resource and the at least one second channel resource, according to a priority rule, receive and/or send the first information on the first channel resource, or receive and/or send the second information on the at least one second channel resource. For specific implementation details, refer to the foregoing related descriptions. Details are not described herein again.

In another example, the communication apparatus 900 may perform the method performed by the network device. The communication apparatus may include a transceiver unit 902, configured to: when resource overlapping exists between a first channel resource and at least one second channel resource, send and/or receive first information on the first channel resource, or send and/or receive second information on the at least one second channel resource. For specific implementation details, refer to the foregoing related descriptions. Details are not described herein again.

It should be understood that division into the units of the foregoing apparatus is merely logical function division. During actual implementation, all or some of the units may be integrated into one physical entity, or may be physically separated. In addition, the units in the apparatus may be implemented in a form of software invoked by a processor. For example, the apparatus includes a processor. The processor is connected to a memory. The memory stores instructions. The processor invokes the instructions stored in the memory, to implement any one of the foregoing methods or implement functions of each unit of the apparatus. The processor is, for example, a general-purpose processor, for example, a central processing unit (Central Processing Unit, CPU) or a microprocessor. The memory is a memory inside the apparatus or a memory outside the apparatus. Alternatively, the units in the apparatus may be implemented in a form of hardware circuits, and functions of some or all units may be implemented by designing the hardware circuits. The hardware circuits may be understood as one or more processors. For example, in an implementation, the hardware circuit is an application-specific integrated circuit (application-specific integrated circuit, ASIC), and the functions of some or all of the foregoing units are implemented by designing a logical relationship between elements in the circuit. For another example, in another implementation, the hardware circuit may be implemented by using a programmable logic device (programmable logic device, PLD). A field programmable gate array (Field Programmable Gate Array, FPGA) is used as an example, and the field programmable gate array may include a large quantity of logic gate circuits. A configuration file is used to configure a connection relationship between logic gate circuits, to implement functions of some or all of the foregoing units. All units of the foregoing apparatuses may be implemented in a form of software invoked by the processor, or all units may be implemented in a form of the hardware circuit, or some units may be implemented in a form of software invoked by the processor, and a remaining part may be implemented in a form of the hardware circuit.

In embodiments of this application, the processor is a circuit with a signal processing capability. In an implementation, the processor may be a circuit with an instruction reading and running capability, for example, a CPU, a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an ASIC or a PLD, for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as the ASIC, for example, a neural network processing unit (Neural Network Processing Unit, NPU), a tensor processing unit (Tensor Processing Unit, TPU), or a deep learning processing unit (Deep learning Processing Unit, DPU).

It can be learned that each unit of the foregoing apparatus may be one or more processors (or processing circuits) configured to implement the foregoing method, for example, a CPU, a GPU, an NPU, a TPU, a DPU, a microprocessor, a DSP, an ASIC, or an FPGA, or a combination of at least two of these processor forms.

In addition, all or some of the units in the foregoing apparatus may be integrated together, or may be implemented independently. In an implementation, these units are integrated together and implemented in a form of a system-on-a-chip (system-on-a-chip, SOC). The SOC may include at least one processor, configured to implement any one of the methods or implement functions of the units of the apparatus. Types of the at least one processor may be different. For example, the at least one processor includes a CPU and an FPGA, a CPU and an artificial intelligence processor, or a CPU and a GPU.

In a simple embodiment, a person skilled in the art may figure out that the communication apparatus in the foregoing embodiments may be in a form shown in FIG. 10.

An apparatus 1000 shown in FIG. 10 includes at least one processor 1010 and a communication interface 1030. In an optional design, the apparatus 1000 may further include a memory 1020.

A specific connection medium between the processor 1010 and the memory 1020 is not limited in embodiments of this application.

In the apparatus shown in FIG. 10, when communicating with another device, the processor 1010 may perform data transmission through the communication interface 1030.

When the communication apparatus is in the form shown in FIG. 10, the processor 1010 in FIG. 10 may invoke computer execution instructions stored in the memory 1020, so that the apparatus 1000 can perform any one of the foregoing method embodiments.

An embodiment of this application further relates to a chip system. The chip system includes a processor. The processor is configured to invoke a computer program or computer instructions stored in a memory, so that the processor performs the method according to any one of the foregoing embodiments.

In a possible implementation, the processor is coupled to the memory through an interface.

In a possible implementation, the chip system may alternatively directly include a memory. The memory stores a computer program or computer instructions.

For example, the memory may be a volatile memory or a nonvolatile memory, or may include both a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example but not limitative descriptions, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

An embodiment of this application further relates to a processor. The processor is configured to invoke a computer program or computer instructions stored in a memory, so that the processor performs the method according to any one of the foregoing embodiments.

In an example, in embodiments of this application, the processor is an integrated circuit chip, and has a signal processing capability. For example, the processor may be an FPGA, may be a general-purpose processor, a DSP, an ASIC or another programmable logic device, a discrete gate or a transistor logic device, or a discrete hardware component, or may be a system on chip (system on chip, SoC), or may be a CPU, or may be a network processor (network processor, NP), or may be a microcontroller unit (microcontroller unit, MCU), or may be a PLD or another integrated chip, and may implement or perform the methods, steps, and logical block diagrams disclosed in embodiments of this application. The general-purpose processor may be a microprocessor, or the processor may be any conventional processor, or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in the memory, and the processor reads information from the memory and completes the steps in the foregoing methods in combination with hardware of the processor.

It should be understood that embodiments of this application may be provided as a method, a system, or a computer program product.

In a possible implementation, an embodiment of this application provides a computer-readable storage medium. The computer-readable storage medium stores program code, and when the program code is run on a computer, the computer is enabled to perform the foregoing method embodiments.

In a possible implementation, an embodiment of this application provides a computer program product. When the computer program product runs on a computer, the computer is enabled to perform the foregoing method embodiments.

Therefore, this application may use a form of hardware only embodiments, software only embodiments, or embodiments with a combination of software and hardware. In addition, this application may use a form of a computer program product that is implemented on one or more computer-usable storage media (including but not limited to a disk storage, a CD-ROM, and an optical storage) that include computer-usable program code.

These computer program instructions may be stored in a computer-readable memory that can instruct the computer or any other programmable data processing device to work in a specific manner, so that the instructions stored in the computer-readable memory generate an artifact that includes instructions apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to embodiments of this application without departing from the scope of embodiments of this application. In this case, this application is intended to cover these modifications and variations of embodiments of this application provided that they fall within the scope of protection defined by the following claims and their equivalent technologies. In embodiments of this application, unless otherwise stated or there is a logic conflict, terms and/or descriptions in embodiments are consistent and may be mutually referenced, and technical features in different embodiments may be combined into a new embodiment based on an internal logical relationship thereof.

## Claims

1. A communication method, wherein the method comprises:
determining a first channel resource and at least one second channel resource, wherein the first channel resource is used to receive and/or send first information, and the second channel resource is used to receive and/or send second information; and
when resource overlapping exists between the first channel resource and the at least one second channel resource, according to a priority rule, receiving and/or sending the first information on the first channel resource, or receiving and/or sending the second information on the at least one second channel resource.

2. The method according to claim 1, wherein the first channel resource is associated with a serving cell or a candidate cell, and the at least one second channel resource is associated with a candidate cell.

3. The method according to claim 1 or 2, wherein the priority rule comprises: when resource overlapping exists between the first channel resource and the at least one second channel resource, performing uplink sending or downlink receiving on a third channel resource in the first channel resource and the at least one second channel resource based on first priority information.

4. The method according to claim 3, wherein the first priority information comprises at least one of the following:
a priority of first information aperiodically sent or received is higher than a priority of second information semi-persistently sent or received;
a priority of first information aperiodically sent or received is higher than a priority of second information periodically sent or received;
a priority of first information semi-persistently sent or received is higher than a priority of second information periodically sent or received;
a priority of second information aperiodically sent or received is higher than a priority of first information semi-persistently sent or received;
a priority of second information aperiodically sent or received is higher than a priority of first information periodically sent or received; or
a priority of second information semi-persistently sent or received is higher than a priority of first information periodically sent or received.

5. The method according to any one of claims 1 to 4, wherein the first information comprises a first channel and/or a first signal, and the second information comprises a second channel and/or a second signal.

6. The method according to any one of claims 1 to 5, wherein the method further comprises:
receiving third information from a first network device, wherein the first network device is configured to configure or indicate at least one candidate cell, and the third information indicates priority information associated with the at least one candidate cell.

7. The method according to any one of claims 1 to 6, wherein the method further comprises:
receiving fourth information from the first network device, wherein the first network device is configured to configure or indicate at least one candidate cell, and the fourth information indicates priority information associated with the first information and/or the second information.

8. The method according to any one of claims 1 to 7, wherein the method further comprises:
sending fifth information to the first network device, wherein the fifth information is used to indicate a terminal capability, and the terminal capability comprises at least one of the following:
supporting LTM; or
supporting simultaneous transmission and/or reception of a serving cell and a candidate cell.

9. A communication method, comprising:
when resource overlapping exists between a first channel resource and at least one second channel resource, sending and/or receiving first information on the first channel resource, or sending and/or receiving second information on the at least one second channel resource.

10. The method according to claim 9, wherein the first channel resource is associated with a serving cell or a candidate cell, and the at least one second channel resource is associated with a candidate cell.

11. The method according to claim 9 or 10, wherein the method further comprises:
sending third information to a terminal device, wherein the third information indicates priority information associated with at least one candidate cell.

12. The method according to any one of claims 9 to 11, wherein the method further comprises:
sending fourth information to the terminal device, wherein the fourth information indicates priority information associated with the first information and/or the second information.

13. The method according to claim 11 or 12, wherein the priority information comprises at least one of the following:
a priority of first information aperiodically sent or received is higher than a priority of second information semi-persistently sent or received;
a priority of first information aperiodically sent or received is higher than a priority of second information periodically sent or received;
a priority of first information semi-persistently sent or received is higher than a priority of second information periodically sent or received;
a priority of second information aperiodically sent or received is higher than a priority of first information semi-persistently sent or received;
a priority of second information aperiodically sent or received is higher than a priority of first information periodically sent or received; or
a priority of second information semi-persistently sent or received is higher than a priority of first information periodically sent or received.

14. The method according to any one of claims 9 to 13, wherein the first information comprises a first channel and/or a first signal, and the second information comprises a second channel and/or a second signal.

15. The method according to any one of claims 9 to 14, wherein the method further comprises:
receiving fifth information from the terminal device, wherein the fifth information is used to indicate a terminal capability, and the terminal capability comprises at least one of the following:
supporting LTM; or
supporting simultaneous transmission and/or reception of a serving cell and a candidate cell.

16. A communication apparatus, comprising:
a processing unit, configured to determine a first channel resource and at least one second channel resource, wherein the first channel resource is used to receive and/or send first information, and the second channel resource is used to receive and/or send second information; and
a transceiver unit, configured to: when resource overlapping exists between the first channel resource and the at least one second channel resource, according to a priority rule, receive and/or send the first information on the first channel resource, or receive and/or send the second information on the at least one second channel resource.

17. A communication apparatus, comprising:
a transceiver unit, configured to: when resource overlapping exists between a first channel resource and at least one second channel resource, send and/or receive first information on the first channel resource, or send and/or receive second information on the at least one second channel resource.

18. A communication apparatus, comprising a processor, wherein the processor is coupled to a memory, the memory is configured to store a program or instructions, and when the program or the instructions is/are executed by the processor, the method according to any one of claims 1 to 8 is performed, or the method according to any one of claims 9 to 15 is performed.

19. A computer-readable storage medium, wherein the computer storage medium stores computer-readable instructions, and when the computer-readable instructions are run on a communication apparatus, the method according to any one of claims 1 to 8 is performed, or the method according to any one of claims 9 to 15 is performed.

20. A computer program product, comprising computer instructions, wherein when the computer instructions are executed, the method according to any one of claims 1 to 8 is performed, or the method according to any one of claims 9 to 15 is performed.
